# EUROPEAN PATENT APPLICATION

(11) **EP 1 314 534 A2**
(43) Date of publication of application: **28.05.2003**
(21) Application number: 02026376.0
(22) Date of filing: 25.11.2002
(51) Int. Cl.: B29C 45/56, B29C 33/00

(54) **A compression injection molding method of a resin molded articles, the mold apparatus, the resin molded article and a molding machine having the mold apparatus**

(30) Priority: 26.11.2001 JP 2001359120; 04.10.2002 JP 2002292472
(71) Applicant: SUMITOMO HEAVY INDUSTRIES, LTD., Shinagawa-ku, Tokyo 141-8686 (JP); Yoshino Kogyosho Co., Ltd., Tokyo 136-8531 (JP)
(72) Inventor: Tsuyoshi, Sasaki, Yoshino Kogyosho Co., Ltd., Tokyo 136-8531 (JP); Osamu, Watanabe, Yoshino Kogyosho Co., Ltd., Tokyo 136-8531 (JP); Naoki, Takigawa, Chiba 284-0044 (JP)
(74) Representative: Wagner, Karl H., Dipl.-Ing.

(57) **Abstract**

A molding method of and an apparatus for making a resin molded article by using a mold apparatus (23,24) includes the steps of: a) starting filling resin into a cavity (37) forming part of the mold apparatus (23,24) before a mold closing process is finished; b) finishing the mold closing process after filling the resin into the cavity (37) forming part of the mold apparatus (23,24) is finished; and c) implementing a mold clamping process after the mold closing process is finished. A further claim is directed to the manufactured product.

## Description

### BACKGROUND OF THE INVENTION

### 1. Field of the Invention

The present invention generally relates to molding of resin molded articles. More particularly, the present invention relates to a molding method of a resin molded article by a mold apparatus, the mold apparatus, the resin molded article, and a molding machine having the mold apparatus.

### 2. Description of the Related Art

In a molding machine such as an injection molding machine, resin heated and melted in a heating cylinder is injected into a cavity of a mold apparatus under high pressure so that the cavity is filled with the molten resin. The molten resin is then cooled and solidified so as to obtain a molded article.

The mold apparatus includes a stationary mold and a movable mold. The movable mold is advanced to and retracted from the stationary mold by a mold clamping apparatus, to thereby perform mold opening, mold closing, and mold clamping.

Mold opening is defined as retracting the movable mold from the stationary mold in a state where a parting surface of the movable mold is in contact with a parting surface of the stationary mold. Mold closing is defined as advancing the movable mold to the stationary mold until the parting surface of the movable mold comes in contact with the parting surface of the stationary mold in a state where the movable mold is remote from the stationary mold. Mold clamping is defined as the stationary mold being pushed by the movable mold by applying a force in a state where the parting surface of the movable mold comes in contact with the parting surface of the stationary mold.

Meanwhile, an injection compression molding method has been suggested so as to prevent the molded article from being deformed, improve an orientation of the molecules of the resin, and reduce residual stress of the molded article.

In the injection compression molding method, the resin is filled in a state where the cavity is slightly expanded and then the mold clamping is implemented so that the resin in the cavity is compressed. A Rollinks method and a micro mold method are known as injection compression molding methods.

The Rollinks method is a method developed by a British mold company Rollinks in the 1960s. The Rollinks method can be divided into the following two methods. One is a method wherein the resin in the cavity is pressed and compressed without opening the parting surfaces of the mold apparatus. The other is a method wherein the resin in the cavity is pressed and compressed by opening the parting surfaces of the mold apparatus.

In the method wherein the resin in the cavity is pressed and compressed without opening the parting surfaces of the mold apparatus, the molten resin is injected so as to be filled in the cavity and then the expanded cavity is contracted so that the resin is pressed and compressed.

In this case, the respective parting surfaces push each other by a hydraulic cylinder apparatus and a spring, so that the generation of a burr at the molded article due to leaking of the resin to a gap before the parting surfaces can be prevented.

In the method wherein the resin in the cavity is pressed and compressed by opening the parting surfaces of the mold apparatus, the molten resin is injected so as to be filled in the cavity in a state where the movable mold is slightly retracted from the stationary mold so as to slightly open the parting surfaces. After that, the movable mold is advanced to the stationary mold, so that mold closing and mold clamping are implemented and the resin in the cavity is pressed and compressed.

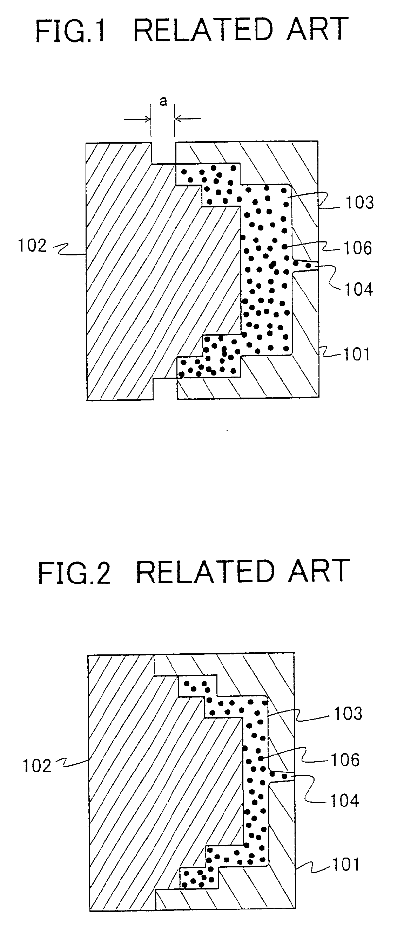

FIG. 1 is a view showing a state where the molten resin is filled into the cavity by a related art molding method. FIG. 2 is a view showing a state where the resin in the cavity is pressed and compressed by a related art molding method.

Referring to FIGS. 1 and 2, a movable mold 102 provided at a movable platen can be advanced to and retracted from a stationary mold 101 provided at a stationary platen. A cavity 103 is formed between the stationary mold 101 and the movable mold 102. A molten resin 106 is filled in the cavity 103. A runner 104 connected to the cavity 103 is formed at the stationary mold 101. The molten resin 106 injected from an injection nozzle of an injection apparatus flows in the runner 104 so as to be filled in the cavity 103.

In a case where the molten resin 106 is filled in the cavity 103, as shown in FIG. 1, the movable mold 102 is slightly retracted from the stationary mold 101. That is, there is a distance of "a" between the parting surface of the movable mold 102 and the parting surface of the stationary mold 101, so that the cavity 103 is slightly expanded.

Accordingly, the molten resin 106 filled in the cavity 103 is not pressed. In order to prevent a burr from being generated at the molded article due to leaking of the molten resin 106 along the parting surfaces of the movable mold 102, a so-called indentation type mold apparatus can be applied. In the indentation type mold apparatus, mold surfaces are formed so that the stationary mold 101 is socket-spigot-connected to, the movable mold 102.

Next, the mold clamping apparatus is performed so that the movable mold 102 is advanced to the stationary mold 101 and the cavity 103 is contracted. Because of this, as shown in FIG. 2, mold closing and mold clamping are implemented so that the molten resin 106 in the cavity 103 is pressed and compressed.

On the other hand, in the micro mold method, a certain amount of compressed resin is expected before the molten resin is injected into the cavity, and thereby the volume of the cavity is expanded in advance. After the molten resin is injected so as to be filled in the cavity, the movable mold or a core of a mold is advanced at a proper timing by the hydraulic cylinder apparatus. Because of this, the cavity that is first expanded and then is contracted so that the molten resin is pressed and compressed.

Thus, a pressure distribution inside of the molten resin in the cavity is equalized by the injection compression molding method such as the Rollinks method or the micro mold method. Therefore, the orientation of the molecules of the resin is improved so that the transcription-ability of a surface of a mold is improved.

As a result of this, shrinking of the resin is prevented, the residual stress of the molded article is reduced, and the deformation of the molded article is prevented. Because of this, the injection compression molding method is applied to molding molded articles required to have high precision, such as a minute part, an optical lens, an optical disk, a light transmission plate, or the like.

However, the related art injection compression molding methods were developed for molding a molded article having a plane configuration such as a disk. Hence, the related art injection compression molding methods cannot be applied to molding the molded articles having a solid configuration such as a deep bottom container.

Since recently the reduction of a weight of a heavy container to a container made of resin is strongly required, there is a tendency fort a thick wall of the container made of resin to become thin. However, in the case of a glass type deep bottom container having a height larger than the diameter of an opening part, if a wall part is made thin-walled, a fluid path of the resin in the cavity becomes narrow. Therefore, the molten resin that is injected is not spread all over the cavity sufficiently so that inferior articles may be generated.

Particularly, in a case where resin having a high viscosity is used, even if the related art injection compression molding methods are applied, flow-ability of the molten resin is low. Because of this, since the molten resin may not pass through a part of the cavity corresponding to a thin-walled side wall, it may be difficult to mold a deep bottom container.

### SUMMARY OF THE INVENTION

Accordingly, it is a general object of the present invention to provide a novel and useful molding method for a resin molded article made by a mold apparatus, the mold apparatus, the resin molded article, and a molding machine having the mold apparatus, in which one or more of the problems described above are eliminated.

Another and more specific object of the present invention is to provide a molding method for a resin molded article made by a mold apparatus in a short period of time, the mold apparatus, a molding machine having the mold apparatus, and the resin molded article, the resin molded article having a deep bottom concave solid configuration wherein a side wall part is thin-walled.

It is also an object of the present invention to provide a molding method of making a resin molded article by using a mold apparatus, including the steps of: a) starting filling resin into a cavity forming part of the mold apparatus before a mold closing process is finished; b) finishing the mold closing process after filling the resin into the cavity forming part of the mold apparatus is finished; and c) implementing a mold clamping process after the mold closing process is finished.

It is also an object of the present invention to provide a mold apparatus used for molding a resin molded article by using a stationary mold and a movable mold, including a cavity forming part forming a configuration of the resin molded article; wherein the cavity forming part includes a bottom part situated in a direction substantially perpendicular to opening and closing directions of the mold apparatus and a side wall part that is thin-walled and inclining to the opening and closing directions of the mold apparatus in a state where the moveable mold comes in contact with the stationary mold.

It is also an object of the present invention to provide a mold apparatus used for molding a resin molded article, including a stationary mold having a parting surface; a movable mold that advances to the stationary mold and has a parting surface coming in contact with the parting surface of the stationary mold by being pushed; a projection part that is provided at one of the parting surfaces and has a ring configuration; and a concave groove forming part that is formed at the other one of the parting surfaces, receives the projection part, and has a ring configuration.

It is also an object of the present invention to provide a resin molded article made by a method including the steps of: a) starting filling resin into a cavity forming part of the mold apparatus before a mold closing process is finished; b) finishing the mold closing process after filling the resin into the cavity forming part of the mold apparatus is finished; and c) implementing a mold clamping process after the mold closing process is finished.

It is also an object of the present invention to provide a resin molded article molded by an injection molding machine, including a configuration of a container having a concave part having a thin-walled thickness of 0.2 mm through 3.0 mm.

It is also an object of the present invention to provide a resin molded article made by a mold apparatus, including a configuration of a container having a concave part inside thereof, and 100 through 400 of Z/T of the container in a case where the resin is polystyrene, 110 through 400 of Z/T of the container in a case where the resin is polystyrene having an endurablity against impact, 120 through 400 of Z/T of the container in a case where the resin is polypropylene, 70 through 300 of Z/T of the container in a case where the resin is high density polyethylene, 80 through 300 of Z/T of the container in a case where the resin is low density polyethylene, and 50 through 250 of Z/T of the container in a case where the resin is polyethylene terephthalate, wherein Z is defined as a resin fluid length from a resin supplying part to a part farthest from the resin supplying part in a cavity forming part forming the configuration of the molded article in the mold apparatus, and T is defined as a thin-walled thickness of the resin molded article.

It is also an object of the present invention to provide a molding machine having a mold apparatus used for molding a resin molded article by a stationary mold and a movable mold thereof, wherein the mold apparatus includes a cavity forming part forming a configuration of the resin molded article, and the cavity forming part includes a bottom part situated in a direction substantially perpendicular to opening and closing directions of the mold apparatus and a side wall part that is thin-walled and inclining to the opening and closing directions of the mold apparatus in a state where the movable mold comes in contact with the stationary mold.

It is also an object of the present invention to provide a molding machine configured for resin molding by a mold apparatus, wherein the mold apparatus includes a stationary mold having a parting surface; a movable mold that advances to the stationary mold and has a parting surface coming contact with the parting surface of the stationary mold by being pushed; a projection part that is provided at one of the parting surfaces and has a ring configuration; and a concave groove forming part that is formed at the other one of the parting surfaces, receives the projection part, and has a ring configuration.

Other objects, features, and advantages of the present invention will become more apparent from the following detailed description when read in conjunction with the accompanying drawings.

### BRIEF DESCRIPTION OF THE DRAWINGS

FIG. 1 is a view showing a state where the molten resin is filled into the cavity by a related art molding method;
FIG. 2 is a view showing a state where the resin in the cavity is pressed and compressed by a related art molding method;
FIG. 3 is a view schematically roughly showing a structure of an injection molding machine of a first embodiment of the present invention;
FIG. 4 is a perspective view of a molded article of the first embodiment of the present invention;
FIG. 5 is a cross sectional view of a molded article of the first embodiment of the present invention;
FIG. 6 is a cross sectional view of a structure of a mold apparatus of the first embodiment of the present invention;
FIG. 7 is a first cross sectional view of a mold apparatus in a mold opening state of the first embodiment of the present invention;
FIG. 8 is a cross sectional view of the mold apparatus of the first embodiment of the present invention where the molten resin is being filled in the cavity;
FIG. 9 is a cross sectional view of the mold apparatus of the first embodiment of the present invention in a mold closing state;
FIG. 10 is a view showing an action of the mold closing process of the mold apparatus of the first embodiment of the present invention;
FIG. 11 is a first cross sectional view of the mold apparatus of the first embodiment of the present invention in a mold opening state;
FIG. 12 is a first cross sectional view of the mold apparatus of the first embodiment of the present invention in a state where a molded product is taken out;
FIG. 13 is a second cross sectional view of the mold apparatus of the first embodiment of the present invention in a state where a molded product is taken out;
FIG. 14 is a view showing a first action sequence of the injection molding machine of the first embodiment of the present invention;
FIG. 15 is a view showing a second action sequence of the injection molding machine of the first embodiment of the present invention;
FIG. 16 is a view showing a third action sequence of the injection molding machine of the first embodiment of the present invention;
FIG. 17 is a view showing a configuration and measurements of the molded product of first embodiment of the present invention;
FIG. 18 is a graph of a relationship of a compressed amount of the resin distance and a fluid length and a height of a molded product in the first embodiment of the present invention;
FIG. 19 is a perspective view showing a label in a second embodiment of the present invention;
FIG. 20 is a cross sectional view of a mold apparatus of a second embodiment of the present invention in a mold opening state;
FIG. 21 is a cross sectional view of a mold apparatus of a third embodiment of the present invention in a state where the molten resin is being filled in the cavity;
FIG. 22 is a cross sectional view of a mold apparatus of a fourth embodiment of the present invention in a state where the molten resin is being filled in the cavity;
FIG. 23 is a cross sectional view of a mold apparatus of a fifth embodiment of the present invention in a state where the molten resin is being filled in the cavity;
FIG. 24 is a cross sectional view of a mold apparatus of a sixth embodiment of the present invention in a state where the molten resin is being filled in the cavity;
FIG. 25 is a cross sectional view of a mold apparatus of a seventh embodiment of the present invention in a state where the molten resin is being filled in the cavity;
FIG. 26 is a cross sectional view of the mold apparatus of the seventh embodiment of the present invention in a mold opening state;
FIG. 27 is a cross sectional view of a mold apparatus of an eighth embodiment of the present invention in a state where the molten resin is being filled in the cavity; and
FIG. 28 is a cross sectional view of a mold apparatus of a ninth embodiment of the present invention in a state where the molten resin is being filled in the cavity.

### DETAILED DESCRIPTION OF THE PREFERRED EMBODIMENT

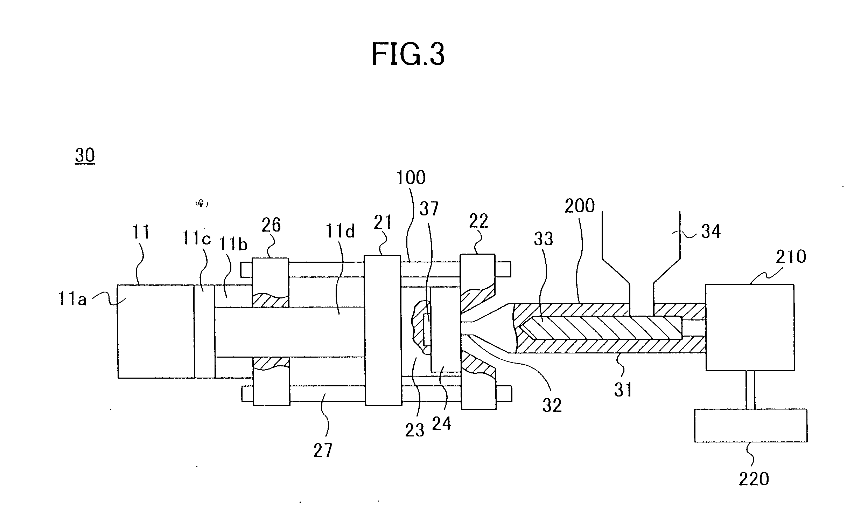

A description will now be given, with reference to FIGS. 3 through 28, of embodiments of the present invention.

First, a first embodiment of the present invention will be described. FIG. 3 is a view schematically roughly showing a structure of an injection molding machine of the first embodiment of the present invention.

Referring to FIG. 3, an injection molding machine 30 includes a mold clamping apparatus 100 and an injection apparatus 200. The injection apparatus 200 includes a heating cylinder 31. A hopper 34 for supplying a material (resin) is arranged at the heating cylinder 31 so that the resin is supplied to the heating cylinder 31. An injection nozzle 32 is provided at a front end part of the heating cylinder 31. A screw 33 is provided inside of the heating cylinder 31. The screw 33 is rotated inside of the heating cylinder 31 and retracted and advanced in a right and left directions, respectively, in FIG. 3, by a driving part 210.

The resin supplied by the hopper 34 is heated and becomes molten in the heating cylinder 31 and then is injected at a high pressure. The resin that is injected is filled in a cavity 37 (described as "a cavity forming part" in claims) of the mold apparatus 100 so as to be cooled and solidified and thereby a molded article is obtained.

The advancing and retracting of the screw 33 is controlled by a control device 220. Generally, a pressure control based on a filling pressure of the resin is implemented for the advancing and retracting of the screw 33. That is, the advancing and retracting of the screw 33 is controlled so that the resin that is injected or the resin that is filled in the cavity 37 has a designated pressure value.

However, in this embodiment, the position of the screw 33 is controlled regardless of the filling pressure of the resin. Because of this, the resin of an amount corresponding to approximately 100% through 150%, approximately 120% preferably, of the capacity of the cavity 37 in a mold closing state, for example, is filled in the cavity 37.

The injection molding machine has a stationary mold 24 and a movable mold 23. As described later, the stationary mold 24, the movable mold 23 and others form a mold apparatus.

The movable mold 23 is advanced to and retracted from the stationary mold 24 by a mold clamping apparatus 100 so that mold opening, mold closing, and mold clamping are performed.

Here, mold opening is defined as retracting the movable mold 23 from the stationary mold 24 in a state where a parting surface of the movable mold 23 comes in contact with a parting surface of the stationary mold 24. Mold closing is defined as advancing the movable mold 23 to the stationary mold 24 until the parting surface of the movable mold 23 comes in contact with the parting surface of the stationary mold 24 in a state where the movable mold 23 is remote from the stationary mold 24. Mold clamping is defined as the stationary mold 24 being pushed by the movable mold 23 by applying a force in a state where the parting surface of the movable mold 23 comes in contact with the parting surface of the stationary mold 24.

The mold clamping apparatus 100 includes a stationary platen 22 as a supporting apparatus for supporting the stationary mold 24 and a movable platen 21 as a supporting apparatus for supporting the movable mold 23.

The movable platen 21 faces the stationary platen 22. The movable mold 23 is provided at a surface for providing a mold of the movable platen 21 that faces to the stationary platen 22. The movable platen 21 is provided along tie bars 27 so as to be advanced and retracted. The movable platen 21 is advanced and retracted by driving a hydraulic cylinder apparatus 11.

The stationary platen 22 faces the injection apparatus 200, too. The stationary platen 22 is fixed to a frame part of the injection apparatus 200. The stationary mold 24 is provided at a surface for providing a mold of the stationary platen 22. Furthermore, end parts of a plurality, four for example, of the tie bars 27 are fixed to the stationary platen 22.

A driving part support member 26, facing to a back surface of the movable platen 21, is adjustably provided at the tie bar 27. A hydraulic cylinder apparatus 11 is provided at a back surface (the left side surface in FIG. 3) of the driving part support member 26 as a driving source for the mold clamping apparatus 100. The hydraulic cylinder apparatus 11 includes a head side hydraulic pressure room 11a, a rod side hydraulic pressure room 11b, a piston 11c and a rod 11d.

The head side hydraulic pressure room 11a is provided at an opposite side of the piston 11c from the rod 11d. The rod side hydraulic pressure room 11b is provided at the same side of the piston 11c as the rod 11d. The rod 11d is inserted into a piercing hole formed at the driving part support member 26, so that an end part of the rod 11d is connected to the movable platen 21.

In this embodiment, there are no limitations regarding the mold clamping apparatus and the driving source of the mold clamping apparatus. For example, a direct pressure type mold clamping apparatus shown in FIG. 3 can be used as the mold clamping apparatus.

Alternatively, a toggle type mold clamping apparatus using a toggle link can be used as the mold clamping apparatus. Furthermore, a complex type mold clamping apparatus, wherein a link mechanism and a cylinder apparatus are combined, can be used as the mold clamping apparatus. In addition, the hydraulic cylinder apparatus shown in FIG. 3 or a combined type driving source wherein an electric driving motor and a ball screw are combined, can be used as the driving source.

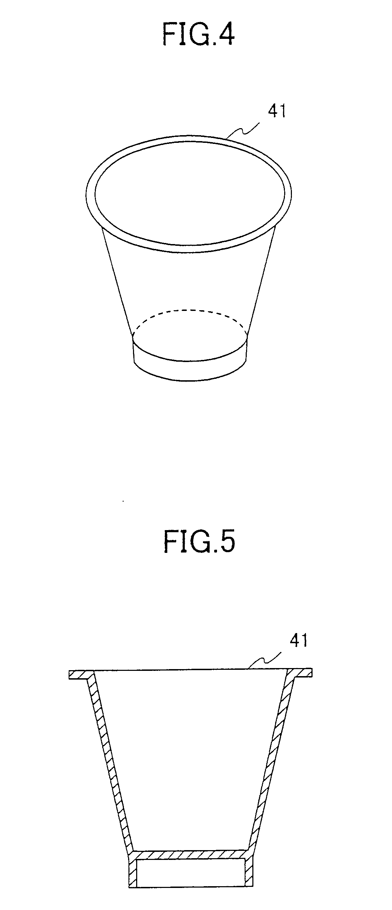

FIG. 4 is a perspective view of the molded article of the first embodiment of the present invention. FIG. 5 is a cross sectional view of the molded article of the first embodiment of the present invention.

In this embodiment, there is no limitation of a configuration of the molded article. However, distinctive points of the present invention are that the molding method and the mold apparatus of the present invention can be applied to mold a molded article 41 having a solid configuration, as shown in FIGS. 4 and 5, of a deep bottom container wherein a side wall of the container is thin-walled.

Hereinafter, a case where the molded article 41 having a solid configuration of a deep bottom container wherein a side wall of the container is thin-walled, is molded, will be described as an example. As the above mentioned molded article, there are, for example, a container for food such as jelly, pudding, or the like, a cup, a cap of the container, a supplemental molded article used for hollow molding (blow molding) such as a parison or a perform, or the like.

Inventors of the present inventions succeeded in molding a resin molded article having a solid configuration of a deep bottom container of a depth more than 10 mm, a thickness of the side wall part of approximately 0.2 through 3 mm, normally approximately 1 mm, as a result of this embodiment.

In this embodiment, there is no particular limitation of a material for the resin molded article. However, distinctive points of the present invention are that the molding method and the mold apparatus of the present invention can be applied to mold a molded article made of a resin having a high viscosity in a short period of time with a high precision.

Hence, a case where the molded article made of a resin having a high viscosity is molded will be described as an example of this embodiment. Here, the resin having a high viscosity is a resin having a melt viscosity higher than 3600 poise, a melt flow rate (melt index) lower than 30, or an average molecular weight more than 24000.

A resin molded article made of resin having a high viscosity is a molded article made of PET (polyethylene terephthalate), PC(polycarbonate), PMMA (polymethyl methacrylate), HDPE(high density polyethylene), AS(styrene/acrylonitrile) and the like.

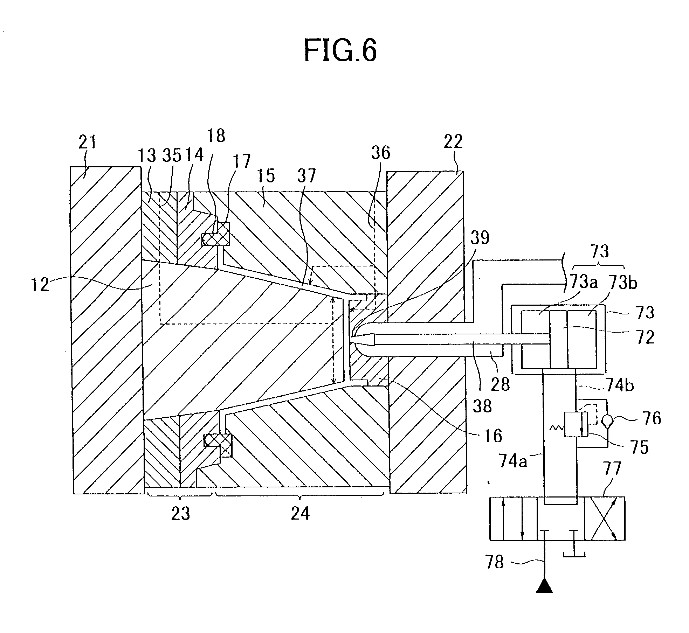

FIG. 6 is a cross sectional view of a structure of a mold apparatus of the first embodiment of the present invention.

Referring to FIG. 6, the mold apparatus includes the movable mold 23, a mold core 12, a core pushing plate 13, a stripper plate 14, the stationary mold 24, a cavity pattern plate 15, a gate block 16, and others.

The mold core 12 of the movable mold 23 is provided at a surface for providing a mold of the movable platen-21. The mold core 12 is used for forming an inside surface of the molded article. The stripper plate 14 is provided at the core pushing plate 13. The gate block 16 is fit inside of the cavity pattern plate 15 of the stationary mold 24 provided at the surface for providing a mold of the stationary platen 22. As shown in FIG. 6, the cavity 37 is formed in a gap by the mold core 12, the stripper plate 14, the cavity pattern plate 15, and the gate block 16, as a cavity forming part forming a configuration of the molded article 41, in a mold closing state.

A resin fluid path 28, such as a spool wherein resin injected by an injection nozzle 32 (illustrated in FIG. 3) provided at a front end of a heating cylinder 31, is formed in the stationary platen 22. A gate hole (described as a "gate hole forming part" in claims) 39 connecting the inside of the cavity 37 to the resin fluid path 28 is formed in the gate block 16. Because of this, the molten resin injected by the injection nozzle 32 is filled into the cavity 37. Thus, the gate hole 39 functions as a resin supplying part to the cavity 37. The resin fluid path 28 is a hot runner. The resin fluid path 28 may be a hot runner having a heating apparatus.

Concave and convex parts are formed at surfaces by which the stripper plate 14 and the cavity pattern plate 15 come in contact each other, namely the parting surface of the movable mold 23 and the parting surface of the stationary mold 24, so that the movable mold 23 is socket-spigot-connected to the stationary mold 24. Because of this, the molten resin filled in the cavity 37 is prevented from leaking out from a gap between the parting surfaces. Hence, generation of a burr at the molded article can be avoided.

An insert ring 17 is detachably fixed to the parting surface of the cavity pattern plate 15 by a fixing member such as a bolt, a plate screw or the like. The insert ring 17 includes a base part fixed to the parting surface of the cavity pattern plate 15 and a projection part projecting to the parting surface of the stripper plate 14. The insert ring 17 has a cross section of an "L" shape. It is preferable that a groove forming part, as shown in FIG. 6, be formed at the parting surface of the cavity pattern plate 15 so that the base part of the insert ring 17 is received in the groove forming part. The insert ring 17 may have a cross section of a circle, oval or polygon.

An insert ring receiving groove part 18 that is a concave groove forming part having a ring configuration is formed at the parting surface of the stripper plate 14. The projection part of the insert ring 17 is fixed to the insert ring receiving groove part 18. The molten resin filled in the cavity 37 is prevented from leaking out from a gap between the parting surfaces, by the insert ring 17 and the insert ring receiving groove part 18, as well as the concave and convex parts formed at the parting surfaces of the movable mold 23 and the stationary mold 24. Hence, generation of a burr at the molded article can be avoided.

The insert ring 17 may be fixed to the parting surface of the stripper plate 14 so as to form the insert ring receiving groove part 18 at the parting surface of the cavity pattern plate 15.

It is preferable that the insert ring 17 be made of a softer material than materials of the stripper plate 14 and the cavity pattern plate 15. In a case where the mold apparatus is used for a long period of time, the stripper plate 14 and the cavity pattern plate 15 are not worn down, but rather the insert ring 17 is worn down. Since the insert ring 17 is detachably fixed by a fixing member such as a bolt, a plate screw, or the like, the insert ring 17 can be exchanged easily.

A fluid path 35 for ejecting is formed inside of the mold core 12 and the core pushing plate 13. A first end part of the fluid path 35 for ejecting is connected to the cavity 37. A second end part of the fluid path 35 for ejecting is connected to an external side wall part of the core pushing plate 13. Hence, the fluid path 35 for ejecting functions as a path for a pressurized fluid.

The second end part of the fluid path 35 for ejecting is connected to a pressurized fluid supplying source such as a compressor, an accumulator, or the like, so that the pressurized fluid such as pressurized air is supplied into the cavity 37. Because of this, even if the molded article 41 adheres to the mold core 12 at the time of mold opening, it is possible to easily take out the molded article 41 from the mold core 12 by supplying the pressurized fluid through the fluid path 35 for ejecting.

A fluid path 36 for ventilation is formed inside of the cavity pattern plate 15 and the gate block 16. The fluid path 36, like the fluid path 35 for ejecting, functions as a path for pressurized fluid. A pressurized fluid such as pressurized air supplied from the pressurized fluid supplying source is supplied into the cavity 37 through the fluid path 36 for ventilation. Therefore, even if the molded article 41 adheres to the cavity pattern plate 15 at the time of mold opening, it is possible to easily take out the molded article 41 from the cavity pattern plate 15 by supplying the pressurized fluid through the fluid path 35 for ventilation.

FIG. 6 shows a state where a valve gate pin 38 as a gate pin enters the resin fluid path 28. The valve gate pin 38 is provided at a piston 72 provided in an air pressure cylinder apparatus 73 that is a driving mechanism for the valve gate pin 38. The valve gate pin 38 moves in opening and closing directions of the mold apparatus, namely left and right directions in FIG. 6, by the piston 72.

The air pressure cylinder apparatus 73 is divided into a gate pin side pressure room 73a and an opposite gate pin side pressure room 73b by the piston 72. Pressurized air, as a pressurized fluid, is selectively supplied from a pressurized fluid supplying source 78 to the gate pin side pressure room 73a and the opposite gate pin side pressure room 73b through a switching valve 77, a gate pin side tube 74a and an opposite gate pin side tube 74b.

As a result of this, the air pressure cylinder apparatus 73 is provided. The pressurized fluid supplying source 78 may supply other kinds of pressurized fluid such as pressurized oil instead of the pressurized air. In addition, the pressurized fluid supplying source 78 is commonly used as the supplying source of the pressurized fluid for the fluid path 35 for ejecting.

In a state shown in FIG. 6, the head end of the valve gate pin 38 enters the gate hole 39 so that the gate hole 39 is closed. Hence, in a state shown in FIG. 6, the valve gate pin 38 is kept pushing in the direction of the gate hole 39 by a designated force caused by the air pressure cylinder apparatus 73, so that a maintaining pressure state is formed.

The head end of the valve gate pin 38 receives a force, caused by pressure of the resin in the cavity 37, that pushes the gate valve pin 30 in the direction of the air cylinder apparatus 73. The opposite gate pin side tube 74b is connected to a sequence valve 75 and a check valve 76.

In a case where the pressure of the resin in the cavity 37 has a value higher than a designated value, the pressure in the opposite gate pin side pressure room 73b has a value higher than a designated value provided by the piston 72. As a result of this, the sequence valve 75 is opened so that the piston 72 moves. Accordingly, the valve gate pin 30 moves in the direction of the air pressure cylinder 73 so that the gate hole 39 is opened.

That is, in a case where the resin pressure in the cavity 37 has a value higher than a designated value, the pressure of the resin is superior to the force pushing the valve gate pin 38 to the gate hole 39. As a result of this, the valve gate pin 38 is moved in the direction of the air pressure cylinder 73. Because of this, the gate hole 39 is opened by the gate valve pin 38. Therefore, the resin leaks out from the cavity 37 to the resin fluid path 28 so that the pressure of the resin in the cavity 37 is decreased.

In a case where the resin pressure in the cavity 37 has a value lower than a designated value, the force pushing the valve gate pin 38 to the gate hole 39 is superior to the pressure of the resin. As a result of this, the gate hole 39 is closed again by the head end part of the valve gate pin 38.

Thus, the valve gate pin 38 functions as a pressure valve or a relief valve for maintaining the pressure of the resin in the cavity 37 at a value lower than the designated value.

As long as the value of the resin pressure in the cavity 37 does not become a value higher than the designated value, the head end part of the valve gate pin 38 enters the gate hole 39 so as to maintain closed the gate hole 39. Because of this, even if the molten resin that is filled into the cavity 37 is pressurized and compressed, the molten resin does not leak out from the gate hole 39.

Next, performance of the injection molding machine having the above mentioned structure will be described.

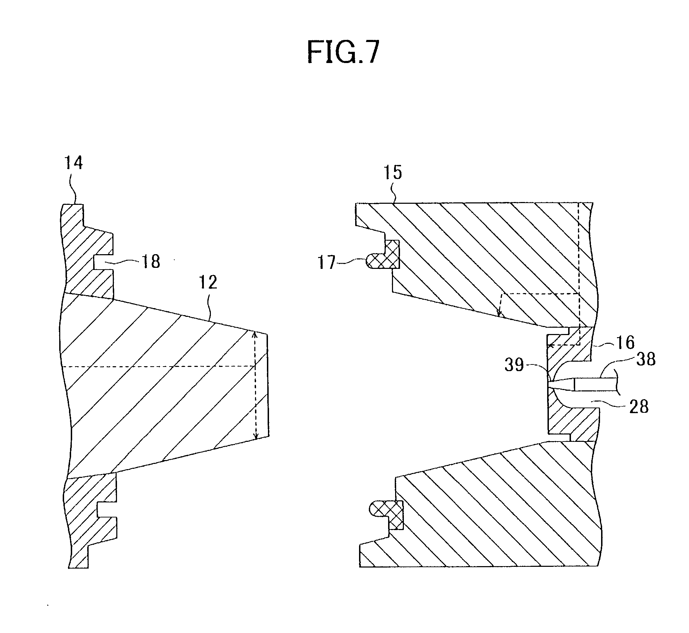

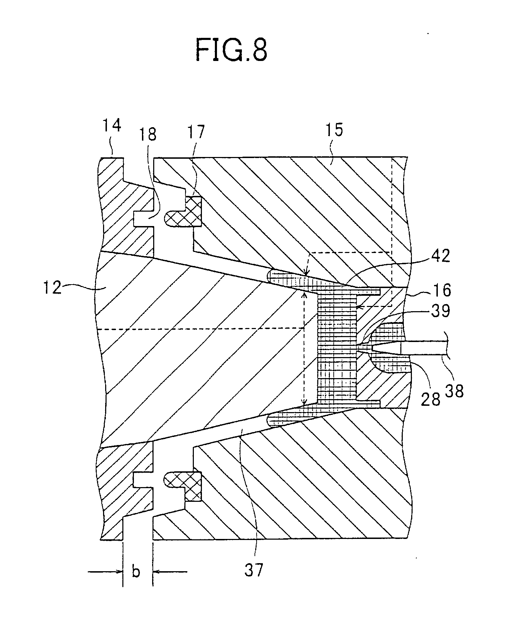

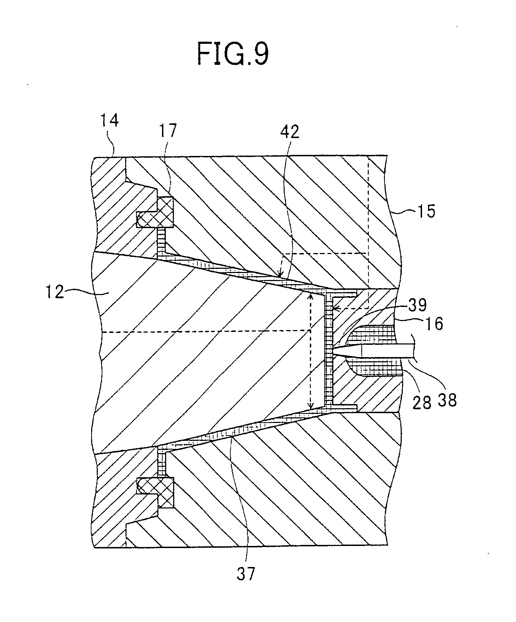

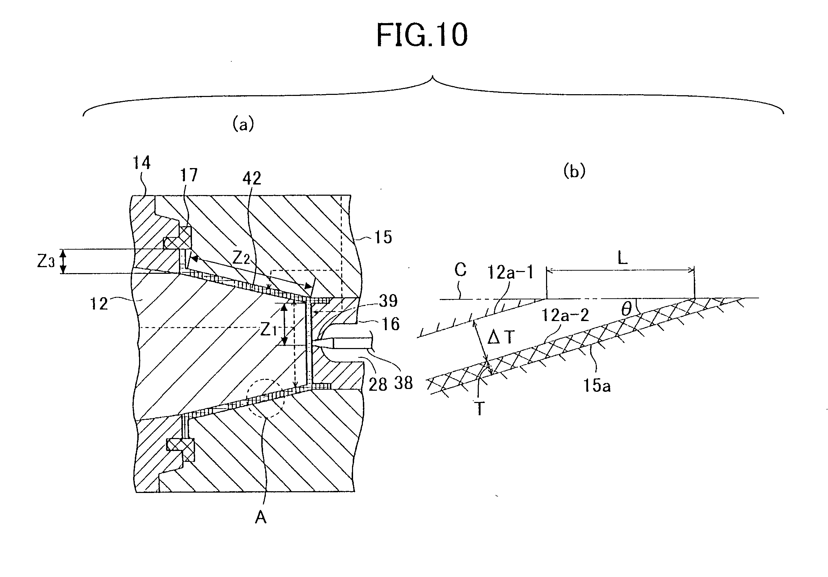

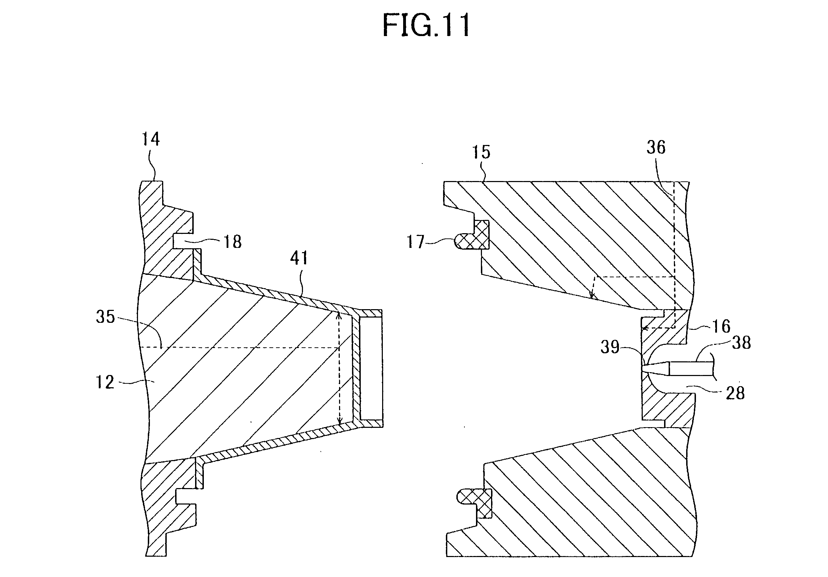

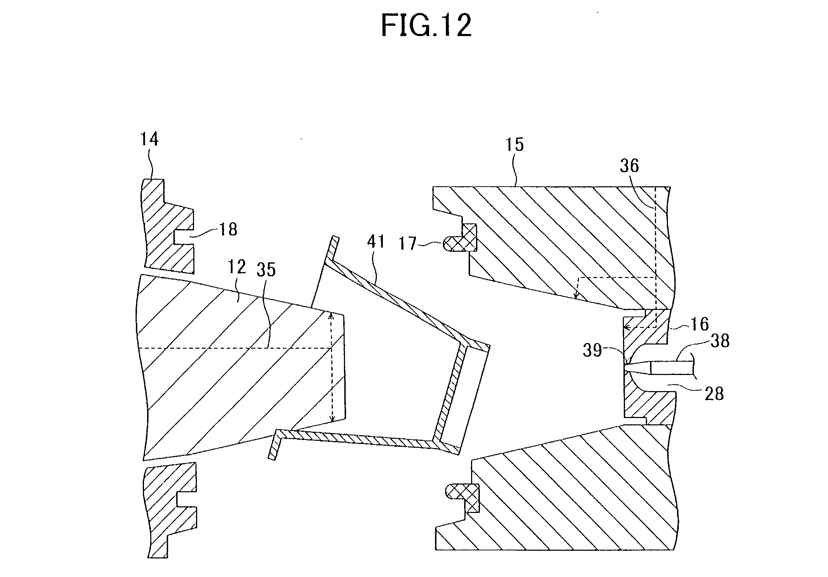

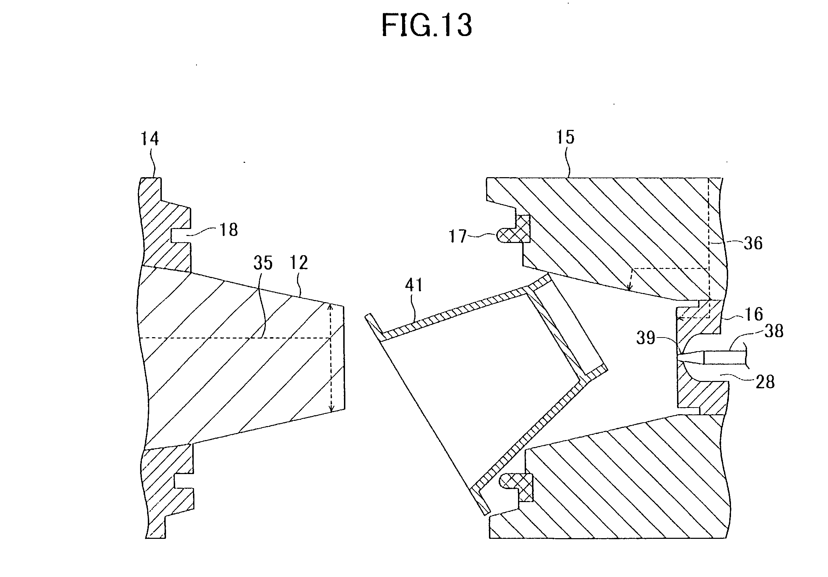

FIG. 7 is a first cross sectional view of a mold apparatus in a mold opening state of the first embodiment of the present invention. FIG. 8 is a cross sectional view of the mold apparatus of the first embodiment of the present invention where the molten resin is being filled in the cavity. FIG. 9 is a cross sectional view of the mold apparatus of the first embodiment of the present invention in a mold closing state. FIG. 10 is a view showing an action of the mold closing process of the mold apparatus of the first embodiment of the present invention. FIG. 11 is a first cross sectional view of the mold apparatus of the first embodiment of the present invention in a mold opening state. FIG. 12 is a first cross sectional view of the mold apparatus of the first embodiment of the present invention in a state where a molded product is taken out. FIG. 13 is a second cross sectional view of the mold apparatus of the first embodiment of the present invention in a state where a molded product is taken out.

Before the molding process is started, a piston 11c and a rod 11d of the hydraulic cylinder apparatus 11 are retracted (in a left direction in FIG. 3). Hence, the mold apparatus is in a mold opening state, as shown in FIG. 7. The head end part of the valve gate pin 38 enters the gate hole 39 so that the gate hole 39 is closed.

After the mold closing process is started, the hydraulic cylinder apparatus 11 is driven so that the piston 11c and the rod 11d are advanced (in a right direction in FIG. 3). As a result of this, the movable platen 21 is advanced so as to approach to the stationary mold 24.

As shown in FIG. 8, when the distance between the parting surface of the stripper plate 14 and the parting surface of the cavity pattern plate 15 becomes a length "b", the hydraulic cylinder apparatus 11 stops driving so that the mold closing process stops for a time. The length "b" is defined as a compressed amount of the resin distance.

The compressed amount of the resin distance is determined based on the thin-walled thickness of the side wall part of the molded article 41 and the viscosity of the molten resin 42. For example, it is preferable that in a case where the thin-walled thickness of the side wall part of the molded article 41 is 1.5 through 3.0 mm, the compressed amount of the resin distance be determined as 3 through 10 times of the thickness, and in a case where the thin-walled thickness of the side wall part of the molded article 41 is 0.2 through 1.5 mm, the compressed amount of the resin distance be determined as 10 through 100 times of the thickness. That is, the length "b" is determined as approximately 3 through 100 times the thin-walled thickness of the side wall part of the molded article 41 which thickness is normally 1 through 15 mm.

As shown in FIG. 8, in a state where there is a gap between the parting surface of the stripper plate 14 and the parting surface of the cavity pattern plate 15, the valve gate pin 38 is retracted in a direction of the air pressure cylinder apparatus 73 so that the gate hole 39 is opened by the valve gate pin 38.

Next, the molten resin 42 injected by the injection nozzle 32 provided at the front end part of the heating cylinder 31 flows through the resin fluid path 42 so as to be filled in the cavity 37 formed between the mold core 12 and the gate block 16 in the mold opening state. After a designated amount of the molten resin 42 is filled into the cavity 37, the valve gate pin 38 is advanced. As a result of this, the head end part of the valve gate pin 38 enters the gate hole 39 so that the gate hole 39 is closed.

In this case, the molten resin 42 is filled in the entire bottom part of the cavity 37 substantially perpendicular to the opening and closing directions of the mold apparatus as shown in FIG. 8. However, the molten resin 42 is not filled in a portion distant from the gate hole 39 of the side wall part inclining to the opening and closing directions of the mold apparatus. That is, the side wall part includes a portion where the molten resin 42 is not filled at the time the designated amount of the molten resin 42 is finished being filled.

As shown in FIG. 8, since the capacity of the bottom part of the cavity 37 is relatively large, the molten resin 42 is mainly filled in the bottom part of the cavity 37 formed by the mold core 12 and the gate block 16. In addition, a period of momentarily stopping the mold closing process for a time is set extremely short.

Because of this, in the period of momentarily stopping the mold closing process for a time, the molten resin filled in the cavity 37 is prevented from leaking out from the gap of the parting surface of the stopper plate 14 and the parting surface of the cavity pattern plate 15. Hence, generation of a burr at the molded article can be avoided.

It is preferable that the filling speed of the molten resin 42 be set as high as possible in order to shorten the period of momentarily stopping the mold closing process for a time as much as possible. Furthermore, it is possible to avoid stopping the mold closing process for a time in the mold closing process. Because of this, it is possible to shorten the time for molding by one shot so that the throughput for the injection molding machine can be improved.

Next, the hydraulic cylinder apparatus 11 restarts driving so that the movable mold 23 is advanced to the stationary mold 24. As a result of this, the mold closing process is restarted as a compression process by which the molten resin 42 is compressed. Filling the molten resin 42 may be continued during the mold closing process that is restarted. Because of this, even in a case where it is not possible to make the filling speed of the molten resin 42 high, it is possible to shorten the molding time by one shot so that the throughput for the injection molding machine can be improved.

The cavity 37 between the mold core 12 and the gate block 16 is narrowed by implementing mold closing. Therefore, the molten resin 42 filled mainly in the bottom part of the cavity 37 is pressurized and moves in the left direction of FIG. 8 in the cavity 37. Hence, the molten resin is filled in the portion distant from the gate hole 39 of the side wall part, so that the molten resin spreads throughout the cavity 37 sufficiently as shown in FIG. 9.

In this case, the projection part of the insert ring 17 is engaged with the insert ring receiving groove part 18 formed at the parting surface of the stopper plate 14, by mold closing. Therefore, the molten resin 42 is prevented from flowing by the insert ring 17 so that the molten resin filled in the cavity 37 is prevented from leaking out from a gap between the parting surface of the movable mold 23 and the parting surface of the stationary mold 24.

After the mold closing process is finished, the movable mold 23 is pushed to the stationary mold 24 by the hydraulic cylinder apparatus 11 so that the mold clamping process is implemented. In the mold clamping process, the gate hole 39 formed at the gate block 16 is closed by the valve gate pin 38.

Thus, the molten resin spreading throughout the cavity 37 sufficiently is compressed by the mold clamping process so that pressure distribution of the resin in the cavity 37 is equalized and the orientation of the molecules of the resin is improved. Hence, the transcription-ability of the surface of a mold is improved and shrinking of the resin is prevented. Accordingly, the residual stress of the molded article is reduced and the deformation of the molded article is prevented.

Next, the flow of the molten resin 42 in the side wall part inclining against the opening and closing directions of the mold apparatus, in the mold closing process wherein the movable mold 23 is advanced to the stationary mold 24, will be described. FIG. 10-(b) is an enlarged view of a side wall part shown by a circle A in FIG. 10-(a). In the mold closing process, the movable mold 23 approaches to the stationary mold 24 so that a surface of the mold core 12 relatively approaches to a surface of the cavity pattern plate 15.

In this case, in a primary step of the mold closing process, the surface of the mold core 12 is positioned at a position that is indicated by "12a-1" in FIG. 10-(b). The surface of the cavity pattern plate 15 is positioned at a position that is indicated by "15a" in FIG. 10-(b). An inclination angle of the side wall part against the opening and closing directions of the mold apparatus is shown as "θ" in FIG. 10-(b). At the time of finishing the mold closing process, the surface of the mold core 12 moves to a position that is indicated by "12a-2" in FIG. 10-(b).

That is, a gap between the surface of the mold core 12 and the surface of the cavity pattern plate 15 in the primary step of the mold closing process is longer than a gap T between the surface of the mold core 12 and the surface of the cavity pattern plate 15 at the time of finishing the mold closing process by ΔT.

ΔT is calculated by multiplying a stroke L of mold closing by sinθ. For example, in a case where θ is set as 4 degrees, if L is 3 mm, ΔT is 0.2 mm, if L is 6 mm, ΔT is 0.4 mm, if L is 10 mm, ΔT is 0.7 mm, and if L is 15 mm, ΔT is 1.0 mm.

In this embodiment, as described above, the designated amount of the resin is finished filling into the cavity 37 before the mold closing process is finished. Therefore, the molten resin 42 flows at the time when the gap at the side wall part between the surface of the mold core 12 and the surface of the cavity pattern plate 15 is wider than the gap T at the time of finishing of the mold closing process by ΔT.

Because of this, in a case where the side wall part inclines against the opening and closing directions of the mold apparatus, even if the gap at the side wall part between the surface of the mold core 12 and the surface of the cavity pattern plate 15 is narrow, the molten resin 42 flows when the gap at the side wall part between the surface of the mold core 12 and the surface of the cavity pattern plate 15 becomes wide. Hence, the molten resin 42 flows smoothly so as to be filled in the whole of the side wall part.

Accordingly, even if the molten resin 42 is not filled in the portion of the side wall distant from the gate hole 39, as shown in FIG. 8, at the time of finishing filling the designated amount of the molten resin 42 into the cavity 37, the molten resin 42 is filled in the portion of the side wall distant from the gate hole 39, as shown in FIG. 9, at the time of finishing the mold closing process.

Thus, since the side wall part inclines against the opening and closing directions of the mold apparatus, the molten resin 42 spreads into the cavity 37 sufficiently by "Wedge Effect". Because of this, the pressure distribution of the resin in the cavity is equalized and an orientation of the molecules of the resin is improved.

Hence, the transcription-ability of a surface of a mold is improved and a weld line is reduced so that the shrinking of the resin is prevented. As a result of this, the residual stress of the molded article is reduced and the deformation of the molded article is prevented.

Next, the molten resin 42 is cooled for designated period of time so as to solidify. Because of this, the molded article is formed and then the mold opening process is implemented. That is, as shown in FIG. 11, the movable mold 23 opens against the stationary mold 24. Just before the mold opening process is implemented, the pressurized fluid is supplied from the fluid paths 35 and 36 for ventilation into the cavity 37.

Next, the molded article 41 is taken off. As shown in FIG. 11, in a case where the molded article 41 adheres to the external surface of the mold core 12, the stripper plate 14 is relatively advanced to the mold core 12. Furthermore, the pressurized fluid is supplied from the fluid path 35 for ejecting into the cavity 37. Because of this, as shown in FIG. 12, the molded article 41 leaves the mold core 12 and falls. In a case where the molded article 41 leaves the mold core and falls so that the molded article may be damaged, the mold article 41 can be taken out from the mold core 12 without falling, by using an apparatus for taking out a molded article not illustrated in FIG. 12.

As shown in FIG. 13, in a case where the molded article 41 adheres to the internal surfaces of the cavity pattern plate 15 and the gate block 16, the pressurized fluid is supplied from the fluid path 36 for ventilation into the cavity 37. Because of this, the molded article 41 leaves the internal surfaces of the cavity pattern plate 15 and the gate block 16 and falls. The mold article 41 may be taken out from the internal surfaces of the cavity pattern plate 15 and the gate block 16 without falling, by using an apparatus for taking out a molded article not illustrated in FIG. 12.

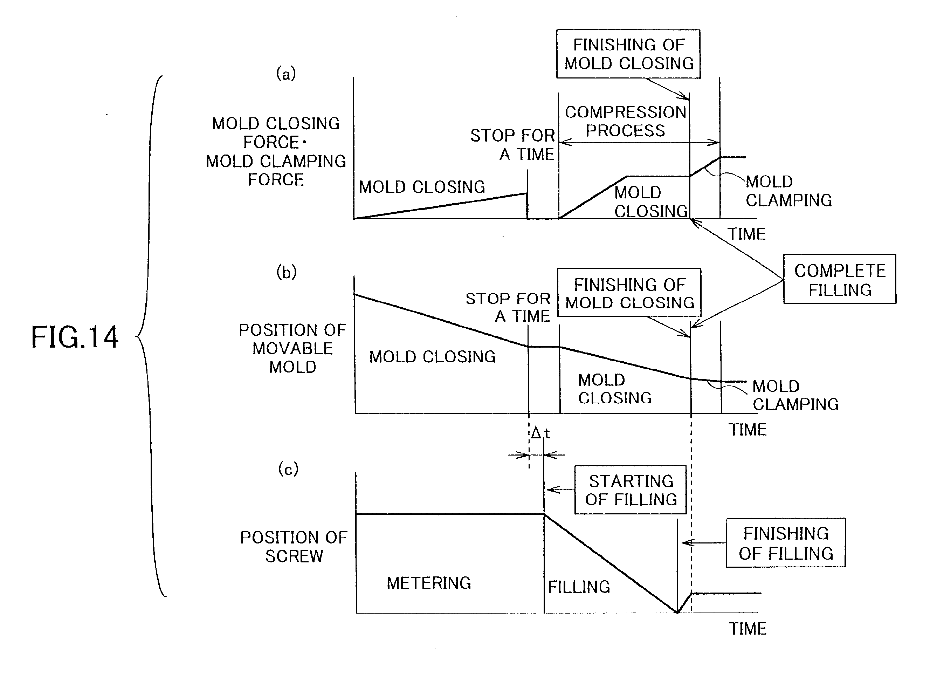

Next, an action sequence of the injection molding machine will be described. FIG. 14 is a view showing a first action sequence of the injection molding machine of the first embodiment of the present invention.

In this embodiment, the mold clamping apparatus and the injection apparatus 30 are operated in a first action sequence, as shown in FIG. 14. In FIG. 14-(a) through 14-(c), the scale of the horizontal axis showing "TIME" is the same respectively.

FIG. 14-(a) shows a variation of a mold clamping force applied to the movable mold 23 by the mold clamping apparatus, corresponding to time. The horizontal axis shows time and the vertical axis shows the size of the mold clamping force.

FIG. 14-(b) shows a variation of positions of the movable mold 23 corresponding to time. The horizontal axis shows time and the vertical axis shows the positions of the movable mold 23. The more the movable mold 23 is advanced so as to approach to the stationary mold 24, the smaller the value of the vertical axis is.

FIG. 14-(c) shows a variation of positions of the screw 33 of the injection apparatus 30. The horizontal axis shows time and the vertical axis shows the positions of the screw 33. The more the screw 33 is advanced so as to approach to the injection nozzle 32, the smaller the value of the vertical axis is.

As shown in FIG. 14, when the mold closing process starts in the mold opening state, the mold clamping force applied by the mold clamping apparatus increases so that the movable mold 23 is advanced and approaches to the stationary mold 24. At the time when the movable mold 23 approaches to the stationary mold 24 so that the gap between the parting surface of the stripper plate 14 and the parting surface of the cavity pattern plate 15 is the length "b", an action of the mold clamping apparatus stops for a time so that movement of the movable mold 23 stops for a time.

At this time, the air pressure cylinder apparatus 73 is operated so that the valve gate pin 38 is retracted in a direction of the air pressure cylinder apparatus 73. Because of this, the gate hole 39 is opened by the valve gate pin 38. An injection process starts by the injection apparatus 30 that continues the metering process of the molten resin 42 by rotating the screw 33 until this time. That is, the screw 33 is advanced, so that the molten resin 42 is injected by the injection nozzle 32 and starts filling into the cavity 37.

Referring to FIG. 3, advancing and retracting of the screw 33 is controlled by the control apparatus 220. Generally, a pressure control based on a filling pressure of the resin is implemented so that the screw 33 is advanced and retracted. That is, advancing and retracting of the screw 33 is controlled so that the pressure of the molten resin 42 that is injected or the molten resin 42 filled in the cavity 37 has a designated value.

However, in this embodiment, the position of the screw 33 is controlled irrespective of the filling pressure of the resin. Because of this, the designated amount of the molten resin 42 is filled in the cavity 37.

During a period of time when the molten resin 42 continues filling, the mold clamping apparatus restarts operating so that the mold closing process is restarted. During a period of time when the mold closing process continues, the required amount of the molten resin 42 to be filled is filled into the cavity 37 so that the filling of the molten resin 42 is finished. As a result of this, the air pressure cylinder apparatus 73 is operated so that the valve gate pin 38 is advanced and the head end part of the gate pin 30 enters the gate hole 39. Because of this, the gate hole 39 is closed.

Accordingly, even if the pressure is applied to the molten resin 42 in the cavity 37 by mold closing, the gate hole 39 is closed by the valve gate pin 38 at the time when the mold closing process, wherein the pressure becomes high, is finished. Hence, the molten resin 42 is prevented from flowing backward to the injection apparatus.

After the molten resin 42 is finished filling, the screw 33 is retracted slightly. Because of this, the amount of the molten resin 42 that remains in the resin fluid path 28 is decreased. The pressure of the molten resin 42 in the cavity 37 has a value higher than the designated value so that the gate hole 39 is opened by the valve gate pin 38. As a result of this, even if the molten resin 42 is leaked out from the cavity 37 to the fluid path 28, the molten resin 42 that is leaked out is received in the resin fluid path 28.

Next, the parting surface of the stripper plate 14 comes in contact with the parting surface of the cavity pattern plate 15, so that the mold closing process is finished and the mold clamping force is increased by the mold clamping apparatus. The capacity of the cavity 37 is contracted by the mold closing process so that the molten resin 42 in the cavity 37 is pressurized and compressed. Because of this, the molten resin 42 spreads into the cavity 37 sufficiently so that the molten resin 42 is filled into the entirely of the cavity 37.

Furthermore, the molten resin 42 in the cavity 37 is pressurized and compressed by the mold clamping process following the mold closing process. Because of this, the molten resin 42 spreads into the cavity 37 sufficiently so that the molten resin 42 is filled into the cavity 37 completely. In this case, the movable mold 23 is advanced slightly. Since the gate hole 39 is closed by the gate valve pin 38, even if a high pressure is applied to the molten resin 42 in the cavity 37 by mold clamping, the molten resin does not flow backward to the injection apparatus.

The mold clamping apparatus maintains an increased mold clamping force so as to implement mold clamping with high pressure. In the process of mold clamping with high pressure, the movable mold 23 is not advanced and stops. Because of this, the molten resin 42 receives a compressing force so that pressure distribution inside of the molten resin 42 is equalized.

Hence, the orientation of the molecules of the resin is improved so that the transcription-ability of a surface of a mold is improved. Accordingly, the weld line is reduced so that the shrinking of the resin is prevented. As a result of this, the residual stress of the molded article is reduced and the deformation of the molded article is prevented.

In a case where the pressure of the molten resin 42 in the cavity 37 has a value more than designated value, the gate hole 39 is opened by the valve gate pin 38. As a result of this, the molten resin 42 is leaked out from the cavity 37 to the resin fluid path 28 so that the mold apparatus and the mold clamping apparatus are prevented from being damaged.

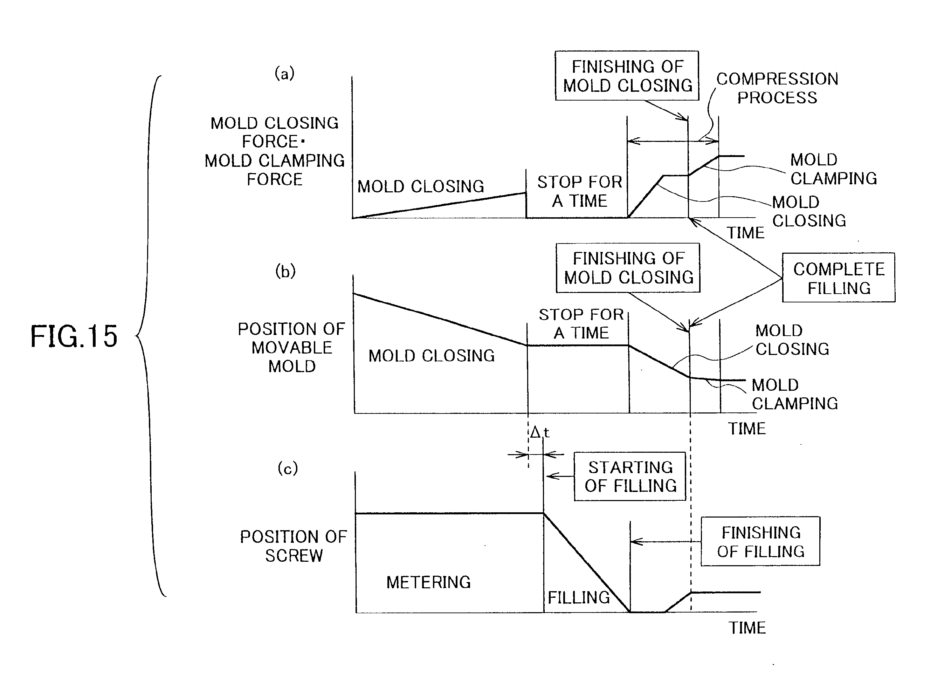

Next, the molten resin 42 is filled during a period of momentarily stopping the mold closing process for a time in a second action sequence. FIG. 15 is a view showing the second action sequence of the injection molding machine of the first embodiment of the present invention. FIG. 15-(a) shows a variation of a mold clamping force applied to the movable mold 23 by the mold clamping apparatus, corresponding to time. FIG. 15-(b) shows a variation of positions of the movable mold 23 corresponding to time. FIG. 15-(c) shows a variation of positions of the screw 33 of the injection apparatus 30 corresponding to time.

An action in a state where the mold closing starts and the working of the movable mold 23 stops for a time, and the molten resin 42 is started filling into the cavity in the second action sequence as well as in the first action sequence is shown in FIG. 14. However, in the second action sequence, the head end part of the valve gate pin 38 enters the gate hole 29 so that the gate hole 39 is closed and the mold closing process is restarted by the mold clamping apparatus, at the time when filling of the molten resin 42 is finished. The action after the mold closing process is finished is the same as the first action sequence and thereby the explanation thereof will be omitted.

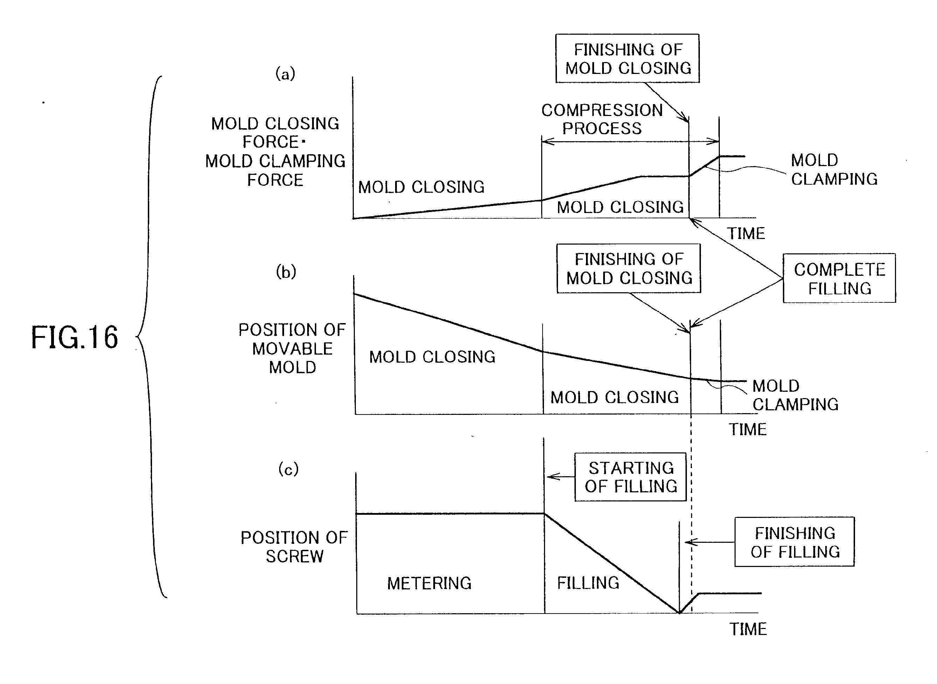

Next, the molten resin 42 is filled without stopping for a time during the mold closing process in a third action sequence. FIG. 16 is a view showing a third action sequence of the injection molding machine of the first embodiment of the present invention. FIG. 16-(a) shows a variation of a mold clamping force applied to the movable mold 23 by the mold clamping apparatus, corresponding to time. FIG. 16-(b) shows a variation of positions of the movable mold 23 corresponding to time. FIG. 16-(c) shows a variation of positions of the screw 33 of the injection apparatus 30 corresponding to time.

In the third action sequence, the mold closing process does not stop for a time from starting to finishing of the mold closing process. When filling of the molten resin 42 is finished during the mold closing process, the valve gate pin 38 enters the gate hole 39 so that the gate hole 39 is closed. The action after the mold closing process is finished is the same as the first action sequence and thereby the explanation thereof will be omitted.

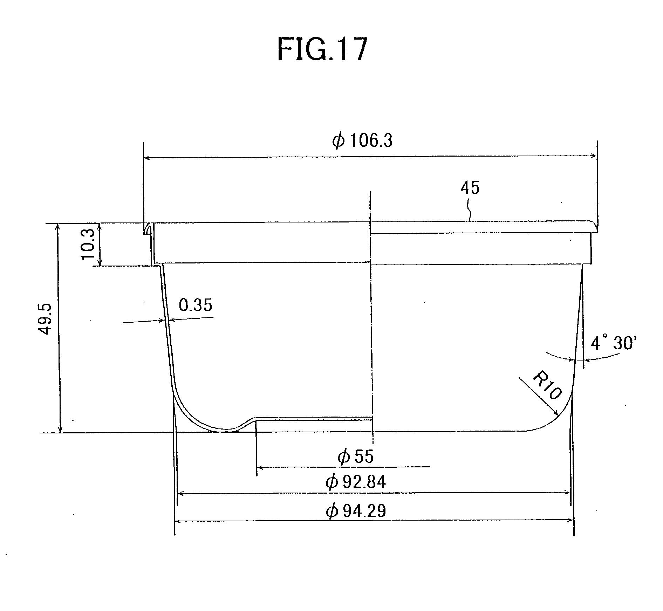

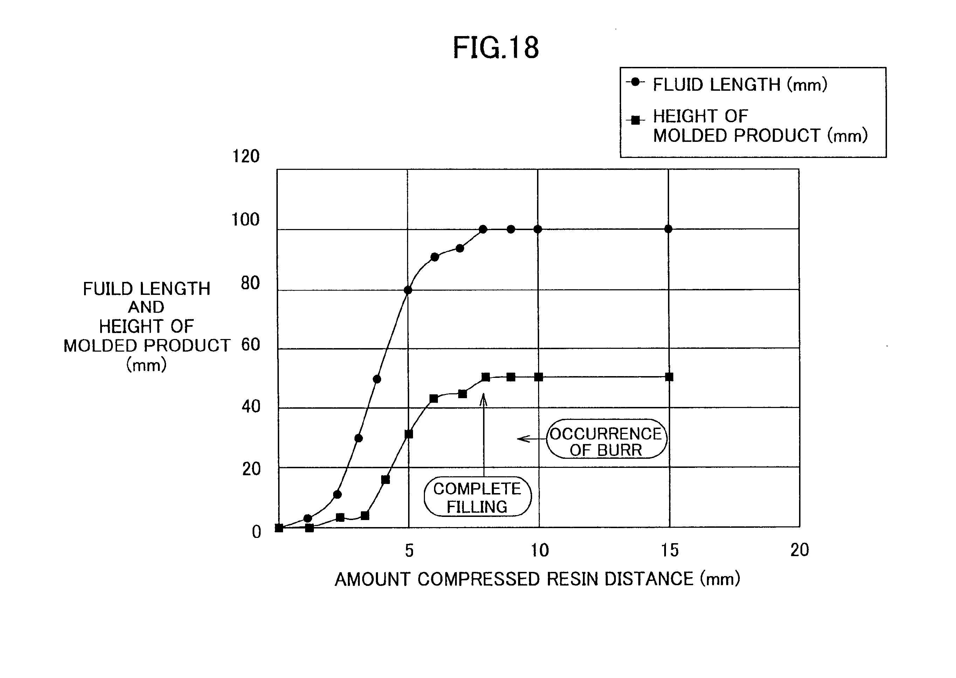

Next, a result of using the molding method of a resin molded article by the mold apparatus, the mold apparatus, and the molding machine, will be described. FIG. 17 is a view showing a configuration and measurements of the molded product of the first embodiment of the present invention. FIG. 18 is a graph of a relationship of an amount of compressed resin distance and a fluid length and a height of a molded product in the first embodiment of the present invention.

Inventors of the present invention experimented to mold a molded article having a configuration and lengths shown in FIG. 17 by using the molding method of a resin molded article by the mold apparatus, the mold apparatus, and the molding machine.

The molded article 45 is a deep bottom container having an opening part of a round shape and made of a resin of HDPE. The above mentioned resin has a fluid property wherein MFR that is a measured value by a melt indexer regulated by JIS (K6922) has a viscosity of 0.06 [g/10min]. The apparatus used in the experiment has a cavity 37 having a configuration corresponding to the configuration and lengths of the molded article 45. A maximum 40 [tons] of the mold clamping force was applied by the mold apparatus. The injection molding machine was operated by following the second action sequence (FIG. 15) for molding the molded article shown in FIG. 17.

FIG. 18 is a graph of a relationship of an amount of compressed resin distance and a resin fluid length and a height of a molded product in the first embodiment of the present. In FIG. 18, the horizontal axis shows the amount of compressed resin distance [mm] and the vertical axis shows a resin fluid length [mm] and a height of the molded article [mm].

The amount of compressed resin distance is defined as a distance between the parting surface of the stripper plate 14 and the parting surface of the cavity pattern plate 15, at the time when filling of the molten resin 42 into the cavity 37 starts, that is at the time when the moving of the movable mold 23 stops for a time. The resin fluid length is defined as a maximum length of the fluid in the cavity 37 of the molten resin 42, namely a length from a resin supplying part (the gate hole 39) to a part farthest from the resin supplying part. For example, the resin fluid length Z in a case shown in FIG. 10 is defined as Z=Z₁+Z₂+Z₃. The height of the molded product is a height of the molded article 45.

The measuring results of the resin fluid length and the height of the molded article 45 when molding was implemented by varying the amount of compressed resin distance are plotted in the graph shown in FIG. 18.

In a case where the amount of compressed resin distance is small, the molten resin 42 filled in the cavity 37 does not reach to a far part from the gate hole 39 so that the height of the molded article 45 is short. If the amount of compressed resin distance is increased, the molten resin 42 reaches to a farther part of the cavity 37.

In a case where the amount of compressed resin distance is more than 8 [mm], the molten resin 42 reaches to the farthest point of the cavity 37, namely a position of the insert ring 17. The height of the molded article 45 increases as the amount of compressed resin distance is increased. In a case where the amount of compressed resin distance is more than 8 [mm], the molded article 45 has a designated height, namely 49.5 [mm]. However, in a case where the amount of compressed resin distance is 10 [mm], a burr occurs at the molded article 45.

In a case wherein the amount of compressed resin distance is too small, the molten resin 42 cannot flow into a narrow part so that the molten resin 42 cannot reach to the furthest part where the insert ring 17 is located. In this case, as shown in FIG. 17, since the thin-walled thickness of the side wall part is 0.35 [mm], the narrow part of the cavity 37 has a gap of approximately 0.35 [mm]. Because of this, if the amount of compressed resin distance is too small, an amount proper for metering of the resin is not injected.

Furthermore, the capacity of the cavity 37 is only slightly contracted by the mold closing process. Accordingly, the molten resin 42 in the cavity 37 is not pressurized and compressed sufficiently so that the molten resin 42 does not reach to a distant part of the cavity 37.

In a case wherein the amount of compressed resin distance is too large, the molten resin 42 enters into a gap between the projection part of the insert ring 17 and the insert ring receiving groove part 18. The molten resin 42 further enters a gap between the parting surface of the stripper plate 14 situated outside of the insert ring 17 and the parting surface of the cavity pattern plate 15.

In a case where the molded article 45 having a configuration and lengths shown in FIG. 17 is molded, it is proper that the amount of compressed resin distance be 8 through 10 [mm] that is 22 through 29 times the thin-walled thickness of the side wall part of the molded article 45.

In a case where the thin-walled thickness of the side wall part of the molded article 45 is smaller, the gap of the narrow part corresponding to the side wall part in the cavity 37 is also narrower, so that a necessary pressure by which the molten resin 42 passes through the narrow part is larger. Hence, in a case where the thin-walled thickness of the side wall part of the molded article 45 is small, it is proper that the amount of compressed resin distance be approximately 100 times of the thin-walled thickness of the side wall part of the molded article 45.

On the other hand, in a case where the thin-walled thickness of the side wall part of the molded article 45 is larger, the gap of the narrow part corresponding to the side wall part in the cavity 37 is wider so that a necessary pressure by which the molten resin 42 passes through the narrow part is smaller. Hence, in a case where the thin-walled thickness of the side wall part of the molded article 45 is large, it is proper that the amount of compressed resin distance be approximately 3 times the thin-walled thickness of the side wall part of the molded article 45.

Accordingly, it is proper that the amount of compressed resin distance be approximately 3 through 100 times of the thin-walled thickness of the side wall part of the molded article 45.

Thus, in this embodiment, the molten resin 42 is filled into the cavity 37 in a state where the parting surface of the movable mold 23 and the parting surface of the stationary mold 24 have a gap, and the mold closing process and the mold clamping process are implemented after filling of the molten resin 42 is finished.

Because of this, the capacity of the cavity 37 is contracted largely by the mold closing process so that the molten resin 42 in the cavity 37 receives a high pressure. Accordingly, even if the viscosity of the molten resin 42 is high, the molten resin 42 flows into the narrow part corresponding to the side wall part of the molded article 41 or 45 in the cavity 37 so as to reach to the distant part of the cavity 37.

The molten resin 42 spreads into the cavity 37 sufficiently so that the molten resin 42 is filled into the cavity 37 completely. Furthermore, since the molten resin 42 receives a compressing force, the distribution of the pressure of the resin inside the cavity 37 is equalized so that the orientation of the molecules of the resin is improved. Hence, the transcription-ability of the surface of the mold is improved and the shrinking of the resin is prevented. Because of this, the residual stress of the molded article is reduced and the deformation of the molded article is prevented.

Hence, according to the present invention, it is possible to mold the resin molded article that is made of the resin having a high viscosity and has a deep bottom concave solid configuration wherein a side wall part is thin-walled, with high precision in a short period of time.

Furthermore, it is possible to make Z/T (a ratio of Z and T) large, wherein Z is the above mentioned resin fluid length and T is the thin-walled thickness of the molded article.

Conventionally, in a case where the resin is GPPS(polystyrene), a limitation value of Z/T is approximately 200. In a case where the resin is HIPS(endurability against impact polystyrene), a limitation value of Z/T is approximately 220. In a case where the resin is PP(polypropylene), a limitation value of Z/T is approximately 240. In a case where the resin is HDPE(high density polyethylene), a limitation value of Z/T is approximately 140. In a case where the resin is LDPE(low density polyethylene), a limitation value of Z/T is approximately 160. In a case where the resin is PET(polyethylene terephthalate), a limitation value of Z/T is approximately 100.

In a case of molding by a limitation value of Z/T, there are problems that the distribution of the pressure of the molded article, the orientation of the molecules of the resin, and the shrinking of the resin are worse. Accordingly, conventionally, molding is implemented, for example, in a state where Z/T is approximately 100 in a case where the resin is GPPS(polystyrene), in a state where Z/T is approximately 110 in a case where the resin is HIPS(endurability against impact polystyrene), Z/T is approximately 120 in a case where the resin is PP(polypropylene), Z/T is approximately 70 in a case where the resin is HDPE(high density polyethylene), Z/T is approximately 80 in a case where the resin is LDPE(low density polyethylene), and Z/T is approximately 50 in a case where the resin is PET(polyethylene terephthalate).

In this embodiment, even if Z/T is, for example, approximately 100 through 400 in a case where the resin is GPPS(polystyrene), approximately 110 through 400 in a case where the resin is HIPS(endurability against impact polystyrene), approximately 120 through 400 in a case where the resin is PP(polypropylene), approximately 70 through 300 in a case where the resin is HDPE(high density polyethylene), approximately 80 through 300 in a case where the resin is LDPE(low density polyethylene), or approximately 50 through 250 in a case where the resin is PET(polyethylene terephthalate), it is possible to mold without having problems regarding the distribution of the pressure of the molded article in the cavity, the orientation of the molecules of the resin, and the shrinking of the resin.

In a state where Z/T is, for example, approximately 200 through 400 in a case where the resin is GPPS(polystyrene), approximately 220 through 400 in a case where the resin is HIPS(endurability against impact polystyrene), approximately 240 through 400 in a case where the resin is PP(polypropylene), approximately 140 through 300 in a case where the resin is HDPE(high density polyethylene), approximately 160 through 300 in a case where the resin is LDPE (low density polyethylene), or approximately 100 through 250 in a case where the resin is PET(polyethylene terephthalate), wherein it is not possible to mold according to conventional art, it is possible to mold according to the first embodiment of the present invention.

Furthermore, filling the designated amount of the resin is finished before the mold closing process is finished. Hence, it is not necessary to control the filling pressure of the resin. Therefore, it is possible to control the position of the screw of the injection apparatus irrespective of the filling pressure of the resin and thereby the injection apparatus can be controlled easily.

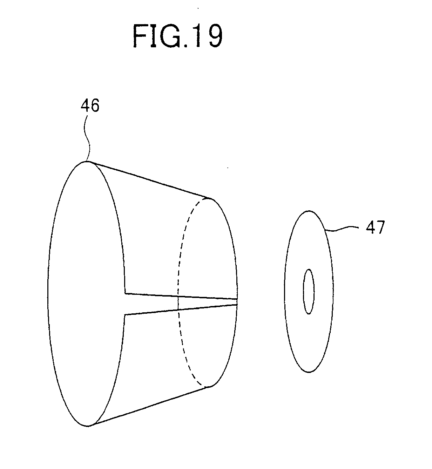

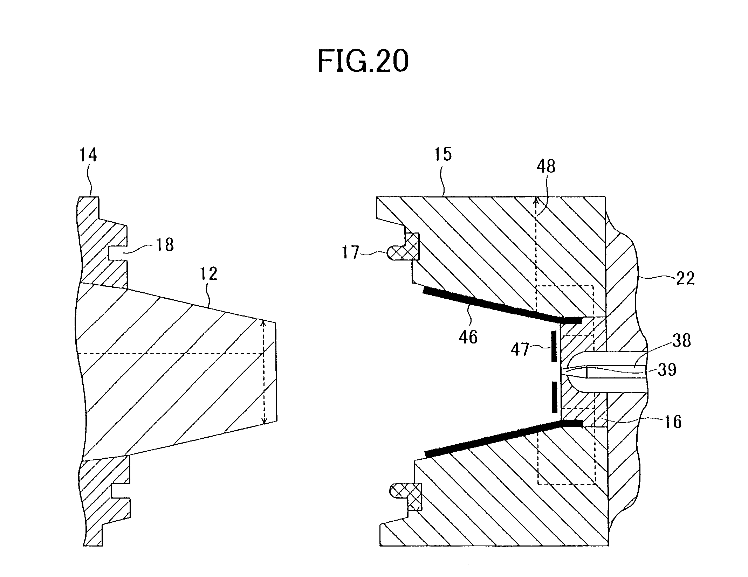

Next, a second embodiment of the present invention will be described. Explanation of parts and action that are the same as the parts and action of the first embodiment will be omitted. FIG. 19 is a perspective view showing a label in a second embodiment of the present invention. FIG. 20 is a cross sectional view of a mold apparatus of a second embodiment of the present invention in a mold opening state.

In the second embodiment, in-mold-labeling wherein labels 46 and 47, as shown in FIG. 19, are stuck on at the same time of molding the molded article 41, is implemented. A character, letter, or the like is preprinted on the label 46 or 47. The label 46 has a curved surface similar to the curved surface of the side wall part of the molded article 41. The label 47 has a configuration similar to the bottom surface of the molded article 41. The label 47 has a hole into which the molten resin 42 injected by the injection nozzle 32 is passed. Although only one of the labels 46 and 47 may be used in the second embodiment, a case where both of the labels 46 and 47 are used will be described hereinafter.

Before staring molding, as shown in FIG. 20, the labels 46 and 47 are provided at the mold apparatus in the mold opening state. The label 46 is provided at the internal surface of the cavity pattern plate 15. The label 47 is provided at a surface facing to the mold core 12, of the gate block 16.

A fluid path 48 for adhering a label is formed inside of the cavity pattern plate 15 and the gate block 16. A first end part of the fluid path 48 for adhering a label is connected to an internal surface of the cavity pattern plate 15 and the surface facing to the mold core 12 of the gate block 16. A second end part of the fluid path 48 for adhering a label is connected to an external wall part of the cavity pattern plate 15 so as to be connected to an evacuation apparatus such as a vacuum pump, and thereby air is evacuated from the second end part of the fluid path 48. Because of this, as shown in FIG. 20, the label 46 adheres to the internal surface of the cavity pattern plate 15. The label 47 adheres to the surface facing to the mold core 12 of the gate block 16. The fluid path 35 for ejecting, described in the first embodiment, may be used as the fluid path 48.

After that, as described in the first embodiment, the mold closing process, the process of the filling of the molten resin 42, the mold clamping process or the like is implemented so that the molded article 41 is molded. Because of this, the molded article 41 on which the labels 46 and 47 adhere can be molded in a body.

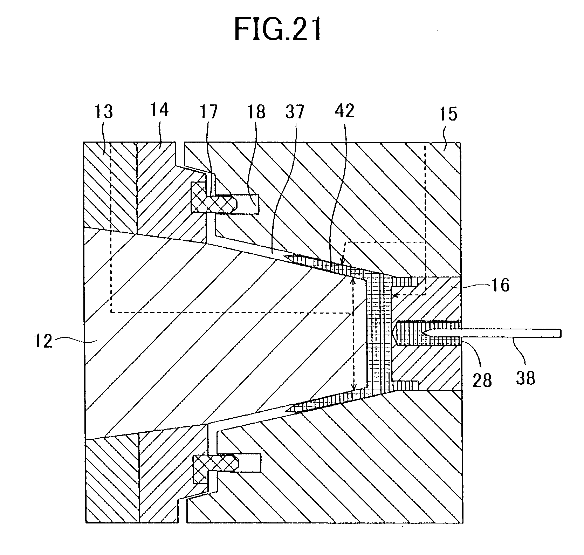

Next, a third embodiment of the present invention will be described. Explanation of parts and action that are the same as the parts and action of the first embodiment will be omitted. FIG. 21 is a cross sectional view of a mold apparatus of the third embodiment of the present invention in a state where the molten resin is being filled in the cavity.

Referring to FIG. 21, in the third embodiment, the base part of the insert ring 17 is detachably fixed to the parting surface of the stripper plate 14 of the movable mold 23 by a fixing member such as a bolt, a plate screw, or the like. Hence, even if the insert ring 17 is worn, it is possible to exchange the insert ring 17 easily.

The projection part of the insert ring 17 projects to the parting surface of the cavity pattern plate 15. As shown in FIG. 21, it is preferable that a groove part be formed at the parting surface of the stripper plate 14 so as to receive the base part of the insert ring 17.

The insert ring receiving groove part 18 having a ring configuration is formed at the parting surface of the cavity pattern plate 15. The projection part of the insert ring 17 is engaged with the insert ring receiving groove part 18. The molten resin 42 filled into the cavity 37 is prevented from leaking out from the parting surfaces of the movable mold 23 and the stationary mold 24 by the insert ring 17 and the insert ring receiving groove part 18, as well as concave and convex parts formed at the parting surfaces of the movable mold 23 and the stationary mold 24, so that the occurrence of a burr is prevented. In addition, an end surface of a brim part of the molded article is blocked by the inner peripheral surface of the insert ring 17.

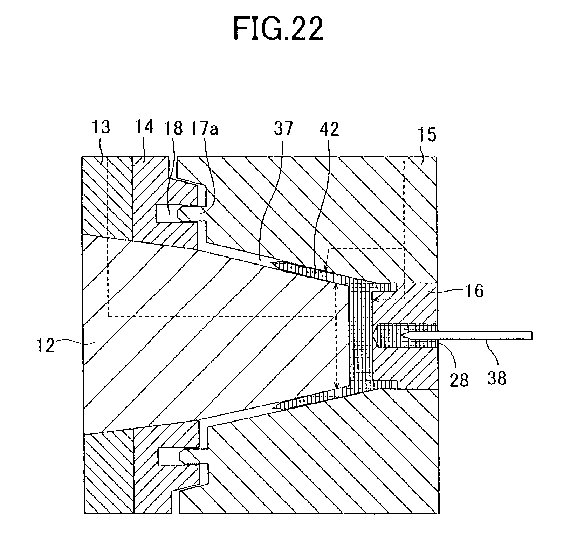

Next a fourth embodiment of the present invention will be described. Explanation of parts and action that are the same as the parts and action of the first through third embodiments will be omitted. FIG. 22 is a cross sectional view of a mold apparatus of a fourth embodiment of the present invention in a state where the molten resin is being filled.

In the fourth embodiment, the projection part having a ring configuration is formed at the parting surface of the cavity pattern plate 15 of the stationary mold 24 in a body. The projection part 17a projects to the parting surface of the stripper plate 14. Therefore, it is possible to assemble the movable mold 23 and the stationary mold 24 easily.

The ring receiving groove part 18 that is a concave groove forming part having a ring configuration is formed at the parting surface of the stripper plate 14 so as to engage with the projection part 17a. The molten resin 42 filled into the cavity 37 is prevented from leaking out from the parting surfaces of the movable mold 23 and the stationary mold 24 by the projection part 17a and the ring receiving groove part 18, as well as concave and convex parts formed at the parting surfaces of the movable mold 23 and the stationary mold 24, so that the occurrence of a burr is prevented. In addition, an end surface of a brim part of the molded article is blocked by the inner peripheral surface of the projection part 17a.

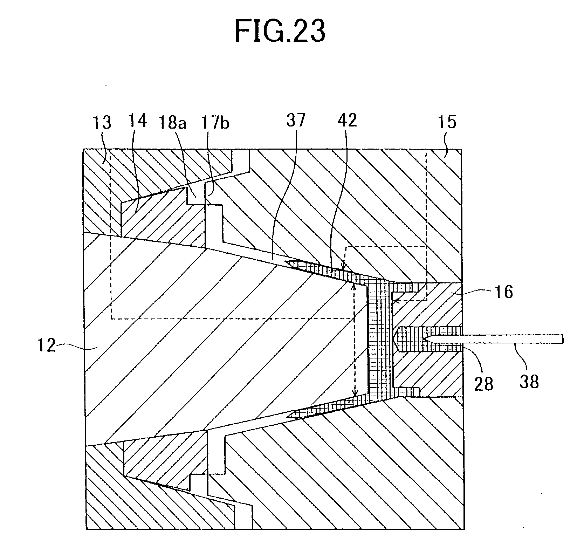

Next, a fifth embodiment of the present invention will be described. Explanation of parts and action that are the same as the parts and action of the first through forth embodiments will be omitted. FIG. 23 is a cross sectional view of a mold apparatus of a fifth embodiment of the present invention in a state where the molten resin is being filled in the cavity.

In the fifth embodiment, a convex part 17b is formed at an external end part of the parting surface of the cavity pattern plate 15 of the stationary mold 24 in a body. The convex part 17b projects to the parting surface of the stripper plate 14.

A concave part 18a is formed at an external end part of the parting surface of the stripper plate 14 so as to engage with the convex part 17b. Since the convex part 17b and the concave part 18a are socket-spigot-connected to each other, the molten resin 42 filled into the cavity 37 is prevented from leaking out from the parting surfaces of the movable mold 23 and the stationary mold 24, so that the occurrence of a burr is prevented. In addition, an end surface of the brim part of the molded article is blocked by the inner peripheral surface of the convex part 17b.

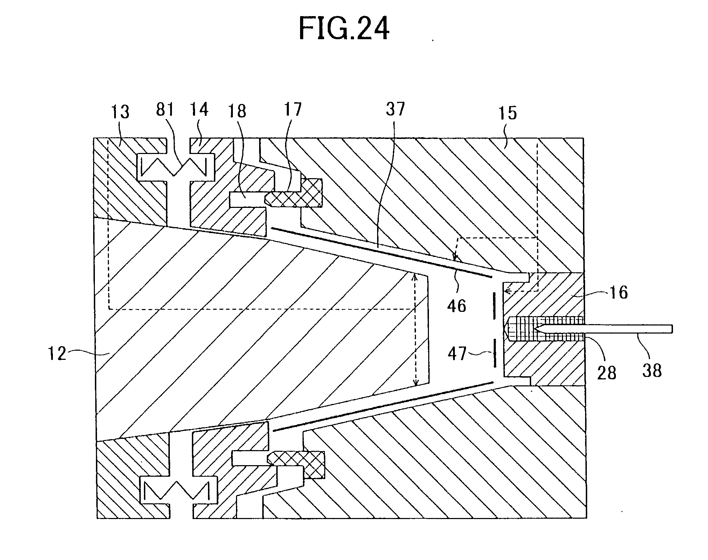

Next, a sixth embodiment of the present invention will be described. Explanation of parts and action that are the same as the parts and action of the first through fourth embodiments will be omitted. FIG. 24 is a cross sectional view of a mold apparatus of the sixth embodiment of the present invention in a state where the molten resin is being filled in the cavity.

In the sixth embodiment, in-mold-labeling wherein labels 46 and 47, as shown in FIG. 19, are stuck on at the same time of molding the molded article 41, is implemented. A character, letter, or the like is preprinted on the label 46 or 47. The label 46 has a curved surface similar to a curved surface of the side wall part of the molded article 41. The label 47 has a configuration similar to a bottom surface of the molded article 41. The label 47 has a hole through which the molten resin 42 injected by the injection nozzle 32 is passed. Although only one of the labels 46 and 47 may be used in the second embodiment, a case where both of the labels 46 and 47 are used will be described hereinafter.

Before staring molding, as shown in FIG. 24, the labels 46 and 47 are provided at the mold apparatus in the mold opening state. The label 46 is provided at the internal surface of the cavity pattern plate 15. The label 47 is provided at a surface facing to the mold core 12, of the gate block 16.

In this embodiment, a spring 81 is provided between the core pushing plate 13 and the stripper plate 14 so as to expand the gap between the core pushing plate 13 and the stripper plate 14. The stripper plate 14 is moved in the direction of the stationary mold 24 by a force applied by the spring 81. Hence, as shown in FIG. 24, in a relatively primary step of the mold closing process, the parting surface of the stripper plate 14 approaches to the parting surface of the cavity pattern plate 15. Because of this, the label 46 that is put in the cavity 37 is pushed in a direction of the gate block 16 by the stripper plate 14 so as to adhere to the internal surface of the cavity pattern plate 15.

A fluid path 48 for adhering a label is formed inside of the cavity pattern plate 15 and the gate block 16. A first end part of the fluid path 48 for adhering a label is connected to an internal surface of the cavity pattern plate 15 and the surface facing to the mold core 12 of the gate block 16. A second end part of the fluid path 48 for adhering a label is connected to an external wall part of the cavity pattern plate 15 so as to be connected to an evacuation apparatus such as a vacuum pump, and thereby air is evacuated from the second end part of the fluid path 48. Because of this, as shown in FIG. 20, the label 46 adheres to the internal surface of the cavity pattern plate 15. The label 47 adheres to the surface facing to the mold core 12 of the gate block 16.

After that, as described in the second embodiment, the mold closing process, the process of the filling of the molten resin 42, the mold clamping process or the like is implemented so that the molded article 41 is molded. Because of this, the molded article 41 on which the labels 46 and 47 adhere can be molded in a body.

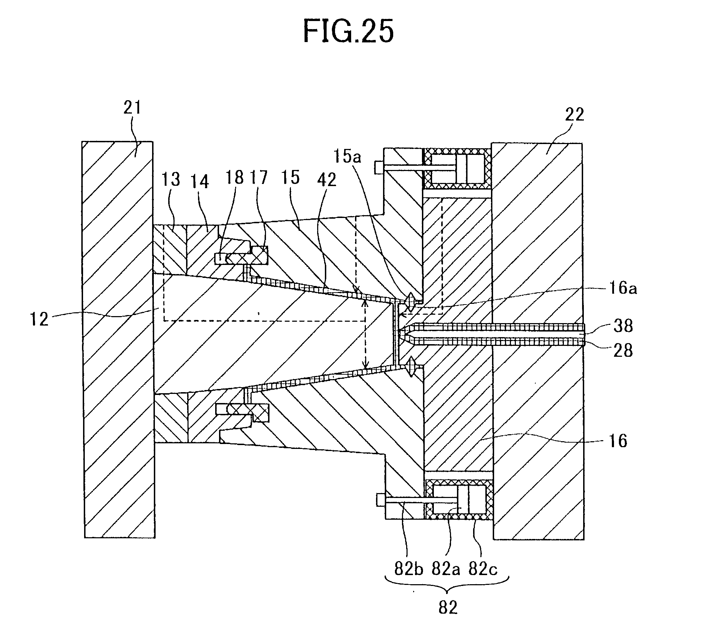

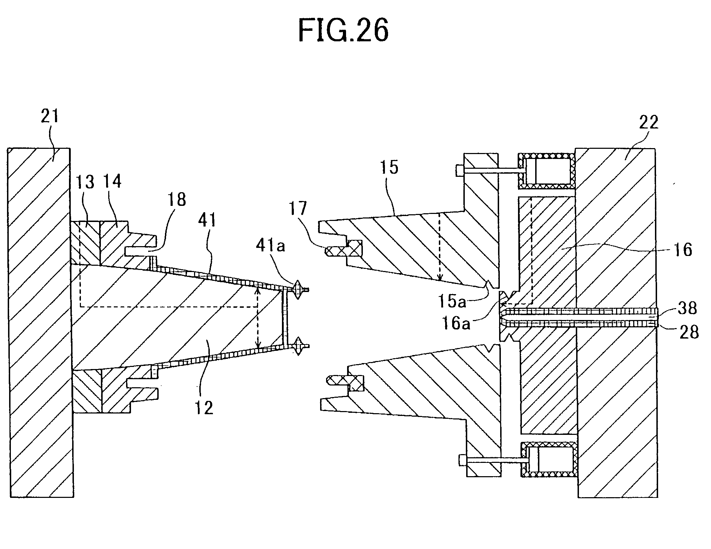

Next, a seventh embodiment of the present invention will be described. Explanation of parts and action that are the same as the parts and action of the first through sixth embodiments will be omitted. FIG. 25 is a cross sectional view of a mold apparatus of the seventh embodiment of the present invention in a state where the molten resin is being filled in the cavity. FIG. 26 is a cross sectional view of the mold apparatus of the seventh embodiment of the present invention in a mold opening state.

In this embodiment, a cylinder apparatus 82 is provided at a side of a surface providing a mold of the stationary platen 22. The cavity pattern plate 15 can be moved in a direction of the movable mold 23 by the cylinder apparatus 82. The cylinder apparatus 82 is operated by pressurized air or pressurized oil.

The cylinder apparatus 82 includes a cylinder unit 82c, a piston 82a, and a piston rod 82b. The cylinder unit 82c is provided at the side of the surface providing a mold of the stationary platen 22. The piston 82a is provided in the cylinder unit 82c. The base part of the piston rod 82b is fixed to the piston 82a. A head end part of the piston rod 82b is fixed to the cavity pattern plate 15. In a case where the cylinder apparatus 82 is not operated, as shown in FIG. 25, the cavity pattern plate 15, the gate block 16 and the stationary platen 22 contact each other.

Concave parts 15a and 16a are respectively formed, as under cut parts, at positions where the concave parts 15a and 16a face, of surfaces forming the cavity 37 of the cavity pattern plate 15 and the gate block 16. Because of this, as shown in FIG. 26, a convex part 41a is formed at the molded article 41, as a under cut part projecting in a direction perpendicular to the opening and closing directions of the mold apparatus.

As shown in FIG. 25, after the mold closing process and then the mold clamping process are implemented so that the molten resin 42 is cooled and solidified and the molded article 41 is molded, the mold opening process is implemented. In this case, the cylinder apparatus 82 is operated so that the cavity pattern plate 15 is moved in a direction of the movable mold 23 as shown in FIG. 26. Because of this, positions of the concave parts 15a and 16a provided at the surfaces forming the cavity 37 at the cavity pattern plate 15 and the gate block 16 are shifted in the opening and closing directions of the mold apparatus. Hence, the molded article 41 is modified elastically, and thereby the convex part 41a of the molded article 41 can be taken out from the concave parts 15a and 16a engaging with the convex parts 41a smoothly.

Thus, in this embodiment, the cavity pattern plate 15 can be moved in the opening and closing directions of the mold apparatus. Hence, even if the under cut part is formed at a surface forming the cavity 37 at the cavity pattern plate 15 and the gate block 16, the mold article 41 can be taken out by the mold opening process without being damaged.

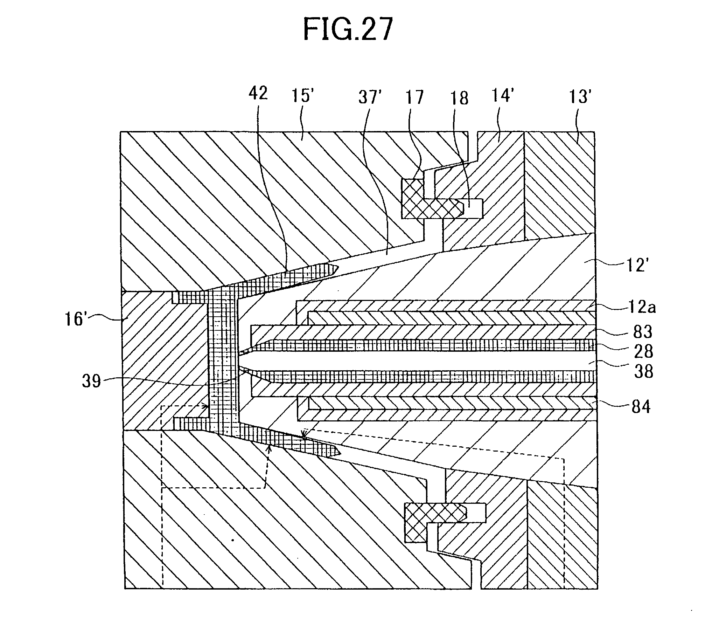

Next, an eighth embodiment of the present invention will be described. Explanation of parts and action that are the same as the parts and action of the first through seventh embodiments will be omitted. FIG. 27 is a cross sectional view of a mold apparatus of an eighth embodiment of the present invention in a state where the molten resin is being filled.

In this embodiment, the mold apparatus includes a mold core 12' of the stationary mold 24 provided at a surface providing a mold of the stationary platen 23, a core pushing plate 13', a stripper plate 14', a cavity pattern plate 15' of the movable mold 23 provided at a surface providing a mold of the movable platen 23, and a gate block 16'. The core pushing plate 13' is used for providing the mold core 12'. The stripper plate 14' is provided at the core pushing plate 13'. The gate block 16' is engaged in an inside part of the cavity pattern plate 15'.

As shown in FIG. 27, in the mold closing state, a cavity 37' forming a configuration of the molded article is formed by the mold core 12', the stripper plate 14', the cavity pattern plate 15' and the gate block 16'. A runner hole 12a, where a hot runner 83 having a heating apparatus 84 is provided, is formed at the mold core 12'. The heating apparatus 84 such as an electric type heater heats the molten resin 42 flowing into the resin fluid path 28.

In the mold closing process, the molten resin 42 injected from the injection nozzle flows into the fluid path 28 so that the designated amount of the molten resin 42 can be filled into the cavity 37' between the mold core 12' and the gate block 16' during the process of the mold closing. After the designated amount of the molten resin 42 is filled into the cavity 37', the valve gate pin 38 is advanced, and thereby, as shown in FIG. 27, the head end part of the valve gate pin 38 enters the gate hole 39 so as to close the gate hole 39.

In this case, the molten resin 42 is filled into all of the bottom part of the cavity 37' substantially perpendicular to the opening and closing directions of the mold apparatus. However, the molten resin 42 is not filled into a part distant from the gate hole 39 of the side wall part inclining against the opening and closing directions of the mold apparatus. That is, the side wall part has a portion where the molten resin is not filled at the time when the designated amount of the molten resin 42 is finished being filled.

As shown in FIG. 27, in this embodiment, the bottom part of the cavity 37' is situated at a side of the movable platen (in a left direction in FIG. 27). The portion distant from the gate hole 39 of the side wall part is situated at a side of the stationary platen (in a right direction in FIG. 27). Hence, the gate hole 39 is positioned at a position corresponding to an inside surface of the bottom part of the container molded article. Because of this, the outside surface of the bottom part of the container molded article is made smooth without having a mark of the gate hole 39. Accordingly, it is possible to decorate with a pattern by printing for example.

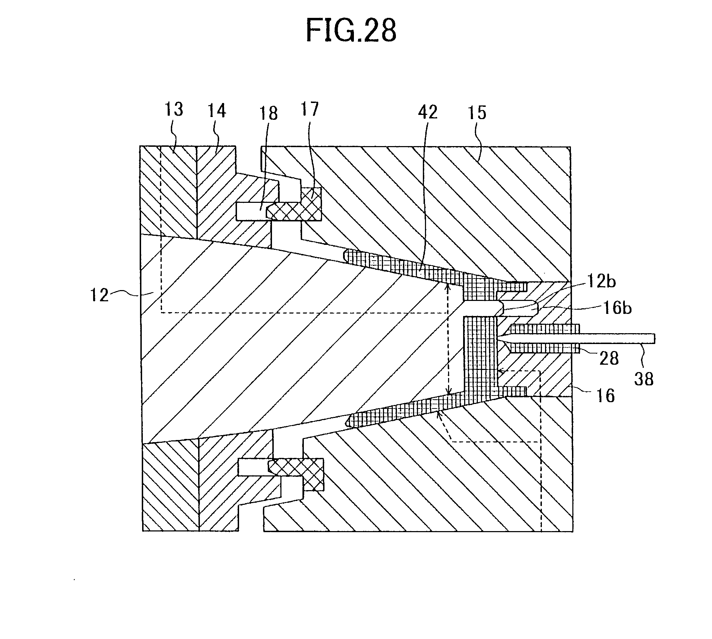

Next, a ninth embodiment of the present invention will be described. Explanation of parts and action that are the same as the parts and action of the first through eighth embodiments will be omitted. FIG. 28 is a cross sectional view of a mold apparatus of the ninth embodiment of the present invention in a state where the molten resin is being filled in the cavity.

In this embodiment, the convex part 12b is formed at a surface facing the gate block 16 of the stationary mold 24 at the mold core 12 of the movable mold 23, in a body. The concave part 12b projects to the gate block 16. The concave part 16b is formed at the surface facing the mold core 12 at the gate block 16 so as to engage with the convex part 12b. The number of the convex part 12b and the concave part 16b may be single or plural. Because of this, a piercing hole is formed at a position corresponding to the convex part 12b of the bottom part of the container molded article. Hence, this embodiment is proper for molding a container having a bottom part including a piercing hole such as a flowerpot.

The present invention is not limited to these embodiments, but variations and modifications may be made without departing from the scope of the present invention.

For example, although the mold clamping operated by hydraulic driving is described in the above mentioned embodiment, the present invention can be applied to an electric type mold clamping apparatus.

Furthermore, the present invention can be not only a horizontal setting type injection molding machine wherein the movable platen moves in a horizontal direction but also a vertical setting type injection molding machine wherein the movable platen moves in a vertical direction.

In addition, the present invention can be not only an injection molding machine but also other kinds of molding machines such as a die-casting machine, an injection sealing press, or the like.

Furthermore, the present invention can be applied to a molding method of a resin molded article, including the steps of: filling a resin having high viscosity into the cavity in a state where there is a gap between a parting surface of the movable mold and a parting surface of a stationary mold; advancing the movable mold by an amount of compressed resin distance that is 3 through 100 time of a thin-walled thickness of the molded article; pushing the parting surface of the movable mold to the parting surface of the stationary mold; and thereby the molded article is molded.

The present invention includes a molding method of a resin molded article by which it is possible for the amount of compressed resin distance in a case where the thin-walled thickness of the molded article is 1.5 through 3.0 [mm] to be 3 through 10 times the thin-walled thickness. The present invention also includes a molding method of a resin molded article by which it is possible for the amount of compressed resin distance in a case where the thin-walled thickness of the molded article is 0.2 through 1.5 [mm] to be 10 through 100 times the thin-walled thickness.

Furthermore, the present invention includes a molding method of a container resin molded article having a deep bottom concave part having a side wall part having a thin wall. The present invention includes a molding method of a container resin molded article by using a resin having a melt viscosity higher than 3600 poise, a melt flow rate (melt index) lower than 30, or an average molecular weight more than 24000.

In addition, the present invention includes a molding method of a container resin molded article wherein an amount of compressed resin distance is determined based on a thin-walled thickness of the side wall part and a viscosity of the resin. The present invention also includes a molding method of a container resin molded article wherein a gate hole formed at a stationary mold is closed by a gate pin when the movable mold is advanced.

This patent application is based on Japanese priority patent applications No. 2001-359120 filed on November 26, 2001 and No. 2002-292472 filed on October 4, 2002, the entire contents of which are hereby incorporated by reference.

## Claims

1. A molding method of making a resin molded article by using a mold apparatus, comprising the steps of:
a) starting filling resin into a cavity forming part of the mold apparatus before a mold closing process is finished;
b) finishing the mold closing process after filling the resin into the cavity forming part of the mold apparatus is finished; and
c) implementing a mold clamping process after the mold closing process is finished.

2. The molding method as claimed in claim 1, wherein the resin is filled into the cavity forming part by controlling a position of a screw of an injection apparatus in the step a).

3. The molding method as claimed in claim 2, wherein the resin is filled into the cavity forming part by advancing the screw in the step a), and
the screw is retracted after the resin is finished being filled into the cavity forming part.

4. The molding method as claimed in claim 1, wherein pressure of the resin in the cavity forming part is controlled by opening and closing a pressure valve.

5. The molding method as claimed in claim 4, wherein the pressure valve is closed after the resin is finished being filled into the cavity forming part.

6. The molding method as claimed in claim 4, wherein the pressure valve is closed in the step c).

7. The molding method as claimed in claim 4, wherein the pressure valve is opened in a case where the resin in the cavity forming part has a pressure value higher than a designated value.

8. The molding method as claimed in claim 1, wherein the cavity forming part formed by the mold closing process includes a bottom part situated in a direction substantially perpendicular to opening and closing directions of the mold apparatus and a side wall part that is thin-walled and inclining to the opening and closing directions of the mold apparatus.

9. The molding method as claimed in claim 8, wherein the side wall part includes a portion where the resin is not filled at the time the resin is finished being filled.

10. The molding method as claimed in claim 9, wherein a label is placed in the cavity forming part so that an in-mold-labeling process is implemented.

11. The molding method as claimed in claim 1, wherein the resin of an amount corresponding to approximately 100% through 150% of a capacity of the cavity forming part by the mold closing process is filled into the cavity forming part in the step a).

12. A mold apparatus used for molding a resin molded article by using a stationary mold and a movable mold, comprising a cavity forming part forming a configuration of the resin molded article;
wherein the cavity forming part includes a bottom part situated in a direction substantially perpendicular to opening and closing directions of the mold apparatus and a side wall part that is thin-walled and inclining to the opening and closing directions of the mold apparatus in a state where the moveable mold comes in contact with the stationary mold.

13. The mold apparatus as claimed in claim 12, further comprising:
a resin fluid path where the resin flows to the mold apparatus;
a gate hole forming part connecting an inside part of the cavity forming part and the resin fluid path; and
a gate pin closing the connection provided by the gate hole forming part.

14. The mold apparatus as claimed in claim 13, wherein the gate hole forming part is formed at the bottom part of the cavity forming part.

15. A mold apparatus used for molding a resin molded article, comprising:
a stationary mold having a parting surface;
a movable mold that advances to the stationary mold and has a parting surface coming in contact with the parting surface of the stationary mold by being pushed;
a projection part that is provided at one of the parting surfaces and has a ring configuration; and
a concave groove forming part that is formed at the other one of the parting surfaces, receives the projection part, and has a ring configuration.

16. The mold apparatus as claimed in claim 15, wherein the projection part forms an insert ring including a base part provided at the one of the parting surfaces.

17. The mold apparatus as claimed in claim 16, wherein the insert ring is made of a softer material than materials of the stationary mold and the movable mold.

18. The mold apparatus as claimed in claim 15, wherein the projection part is formed with the one of the parting surfaces in a body.

19. The mold apparatus as claimed in claim 15, wherein the projection part is detachably provided at the parting surface.

20. A resin molded article made by a method comprising the steps of:
a) starting filling resin into a cavity forming part of the mold apparatus before a mold closing process is finished;
b) finishing the mold closing process after filling the resin into the cavity forming part of the mold apparatus is finished; and
c) implementing a mold clamping process after the mold closing process is finished.

21. A resin molded article molded by an injection molding machine, comprising:
a configuration of a container having a concave part having a thin-walled thickness of 0.2 mm through 3.0 mm.

22. A resin molded article made by a mold apparatus, comprising
a configuration of a container having a concave part inside thereof, and
100 through 400 of Z/T of the container in a case where the resin is polystyrene,
110 through 400 of Z/T of the container in a case where the resin is polystyrene having an endurablity against impact,
120 through 400 of Z/T of the container in a case where the resin is polypropylene,
70 through 300 of Z/T of the container in a case where the resin is high density polyethylene,
80 through 300 of Z/T of the container in a case where the resin is low density polyethylene, and
50 through 250 of Z/T of the container in a case where the resin is polyethylene terephthalate,
wherein Z is defined as a resin fluid length from a resin supplying part to a part farthest from the resin supplying part in a cavity forming part forming the configuration of the molded article in the mold apparatus, and
T is defined as a thin-walled thickness of the resin molded article.

23. A molding machine having a mold apparatus used for molding a resin molded article by a stationary mold and a movable mold thereof,
wherein the mold apparatus comprises a cavity forming part forming a configuration of the resin molded article, and
the cavity forming part includes a bottom part situated in a direction substantially perpendicular to opening and closing directions of the mold apparatus and a side wall part that is thin-walled and inclining to the opening and closing directions of the mold apparatus in a state where the movable mold comes in contact with the stationary mold.

24. A molding machine configured for resin molding by a mold apparatus,
wherein the mold apparatus comprises:
a stationary mold having a parting surface;
a movable mold that advances to the stationary mold and has a parting surface coming contact with the parting surface of the stationary mold by being pushed;
a projection part that is provided at one of the parting surfaces and has a ring configuration; and
a concave groove forming part that is formed at the other one of the parting surfaces, receives the projection part, and has a ring configuration.
